Europäisches Patentamt

(19) European Patent Office

Office européen des brevets

(11) **EP 0 851 270 A2**

(12) **EUROPEAN PATENT APPLICATION**

(43) Date of publication:
01.07.1998 Bulletin 1998/27

(51) Int. Cl.⁶: $G02F\ 1/1343$, $G09G\ 3/36$

(21) Application number: 97122938.0

(22) Date of filing: 29.12.1997

(84) Designated Contracting States:
AT BE CH DE DK ES FI FR GB GR IE IT LI LU MC NL PT SE
Designated Extension States:
AL LT LV MK RO SI

(30) Priority: 27.12.1996 JP 349302/96

(71) Applicant: **Hitachi, Ltd.**
Chiyoda-ku, Tokyo 101-0062 (JP)

(72) Inventors:
• **Yamamoto, Tsunenori**
Hitachi-shi, Ibaraki 316 (JP)
• **Tsumura, Makoto**
Hitachi-shi, Ibaraki 316 (JP)
• **Fukaya, Ritsuo**
Hitachinaka-shi, Ibaraki 312 (JP)

(74) Representative:
**Beetz & Partner**
**Patentanwälte**
**Steinsdorfstrasse 10**
**80538 München (DE)**

(54) **Active matrix addressed liquid crystal display apparatus**

(57)    In order to eliminate cross talks and horizontal brightness variation and improve its display quality and aperture ratio in an active matrix-addressed liquid crystal display in which electrical field dominantly parallel to its substrate is induced, the load on its common electrodes (104) or scanning lines (102) is reduced according to the invention. Respective pixels aligned in the direction of any scanning line selectably applied with a scanning signal are caused to change their optical properties alternately for every juxtaposed pixels; or in a plurality of pixels defined in a plurality of areas surrounded by a plurality of signal lines and a plurality of scanning lines, respective pixels which are juxtaposed in the direction of the scanning line are arranged to form a storage capacitance respectively between its pixel electrode (105) and a common line (104) or scanning line corresponding thereto which is different between juxtaposed pixels.

FIG.1

## Description

BACKGROUND OF THE INVENTION

Active matrix addressed liquid crystal display apparatus which is thin and light-weight and features high precision picture quality comparable to a cathode ray tube is now beginning to be widely used as a display terminal for office automation equipment.

There are two types of this active matrix liquid crystal displays, one which uses counterposed transparent electrodes formed on the surfaces of two substrates as drive electrodes for driving the liquid crystal layer therebetween, and the other which features a reduced load capacitance and a wider viewing angle than the above-mentioned transparent electrode type. As a method which features more reduced load capacitance and wider viewing angle, there is known a method which is comprised of the steps of forming two electrodes in interdigital arrangement on the same substrate, and applying electrical field to the liquid crystal layer approximately in a parallel direction relative to the interface of the substrate. These prior art methods are disclosed, for example, in JP Publication No.63-21907 and JP-A Laid Open No.7-36058.

SUMMARY OF THE INVENTION

In these prior art, it is disclosed that in order to reduce a load capacitance between scanning lines, signal lines and counter electrodes, interdigital arrangement is provided within the pixel, and counter electrodes (common lines) are formed on the same substrate with other wirings, and more preferably in parallel with scanning lines. Further, such a structure combining one-to-one or two-to-one of scanning lines and common lines is described. Still further, another structure in which scanning lines are used also as common lines is described.

However, in these disclosures of the prior art, respective counter electrodes of respective pixels in a group of pixels addressed by one scanning line are connected to another and same scanning line (or common line) different from the addressing scanning line. In such arrangement, however, there is a problem that a distortion occurs in waveforms of scanning lines or common lines to which the counter electrodes are connected during when each signal voltage is charged in each pixel during a selected scanning period, or during when the potential of the scanning line is changing after completion of the selected scanning period. In particular, in manufacture of a large-sized liquid crystal display or for achieving a high resolution, a problem of deterioration in image quality due to horizontal cross talk or horizontal brightness variation becomes remarkable and substantial.

Further, the pixel structure according to the prior art inherently has a large non-transmittance area occupied by its scanning lines, common lines, pixel electrodes, counter electrodes and the like, thereby tending to limit its aperture ratio the more in the larger sized and the higher resolution display. Still further, when the size of scanning lines and common lines is increased in order to reduce the above-mentioned distortion of waveforms, a resulting aperture ratio will become significantly small.

The present invention has been contemplated to solve all these above-mentioned problems associated with the prior art simultaneously.

Namely, an object of the present invention is to provide an active matrix addressed liquid crystal display which features a high quality image display which is free from cross talk and horizontal brightness variation. Another object of the invention is to provide an active matrix addressed liquid crystal display which features a high aperture ratio which is realized by reducing wiring width even in a high resolution display.

The above-mentioned objects of the invention can be accomplished by halving the number of pixels (areas surrounded by signal lines and scanning lines) to be driven by a single common electrode line.

More particularly, at a first timing, a first group of pixels aligned on a first scanning line are displayed for every other pixels and also a second group of pixels aligned on a second scanning line are displayed for every other pixels such that respective pixels displayed on the first and the second scanning lines form a staggered pattern of display. Then, at a second timing, the remaining pixels which were not displayed of the second group of pixels aligned on the second scanning line are displayed and also a third group of pixels aligned on a third scanning line are displayed for every other pixels such that respective pixels displayed of the second group of pixels on the second scanning line and respective pixels displayed for every other pixels on the third scanning line form another staggered pattern. Thereby, as a whole, pixels on the display are charged for every other pixels alternately to form an overall staggered pattern.

In the case of an arrangement where the common lines are provided, since each pixel electrode of respective pixels juxtaposed in the direction of a scanning line is wired to form each storage capacitance with a different common line, a load concurrently imposed on one scanning line or common line is halved, thereby effectively reducing distortion in signal waveforms, thus reducing cross talks and horizontal brightness variation. Further, because of the reduced load on the common lines, the width of the common lines can be narrowed.

More specifically, the following structures are contemplated for accomplishing the objects of the invention.

(1) A structure in which a counter electrode in any one of respective pixels juxtaposed in the direction of a scanning line, produce electric field with each pixel electrode therein, and is connected to a scanning line (or common line, if available) corresponding thereto which is different from each other between juxtaposed pixels.

(2) A structure in which each active matrix element connected to each pixel electrode of respective pixels juxtaposed in the direction of the scanning line is connected to a scanning line corresponding thereto which is different from each other between juxtaposed pixels.

(3) A structure in which a storage capacitance is formed between one of pixel electrodes of respective pixels juxtaposed in the direction of the scanning line and a counter electrode connected to another scanning line, another common line or another wiring different from the scanning or common line corresponding thereto.

(4) A structure in which respective counter electrodes of respective pixels juxtaposed in the direction of a signal line are connected to respective different common lines corresponding thereto which are different from one another between juxtaposed pixels such that respective pixels undergoing changes of transmittance are arranged in a staggered pattern along a scanning line, thereby reducing the load imposed on the common lines, and hence preventing occurrence of cross talk.

The following combinations of drive methods can be contemplated as means for applying voltages to the above-mentioned electrodes.

(1) As a first combination of a drive method for applying a voltage to respective lines and electrodes, it is contemplated to apply a non-select voltage during a non-selected period and apply a select voltage during a selected period to each scanning line, then to apply a signal voltage to each signal line by reversing polarity of its voltage alternately for every line and at every one frame writing cycle, and to apply a common voltage to each common line by reversing polarity of its voltage alternately for every line and at every one frame writing cycle.

(2) As a second combination of a drive method for applying a voltage to respective lines and electrodes, it is contemplated to apply a non-select voltage which has binary values of high and low during a non-selected period and apply a select voltage which has one value during a selected period to each scanning line, then to apply a signal voltage to each signal line by reversing polarity of its voltage alternately for every line and at every one frame writing cycle, and to apply a common voltage to each common line by reversing polarity of its voltage for every line and at every one frame writing cycle.

(3) As a third combination of a drive method for applying respective voltage to respective lines and electrodes, it is contemplated to apply a non-select voltage during a non-select period and apply a select-voltage during a selected period to each scanning line, to apply a voltage to each pixel by reversing polarity of its voltage and apply a common voltage to each common line by reversing polarity of its voltage alternately for every line and at every one frame writing cycle, and to apply a signal voltage to each signal line by reversing polarity of its voltage alternately for every line and at every one frame writing cycle.

By application of these voltages according to either one of the above-mentioned combinations of the drive methods, respective pixels arranged in a staggered pattern of the invention can be driven effectively.

BRIEF DESCRIPTION OF THE DRAWINGS

These and other objects, features and advantages of the present invention will be understood more clearly from the following detailed description with reference to the accompanying drawings, wherein:

Figure 1 is a schematic block diagram indicating a planar structure of pixel members of a first embodiment of the invention;

Figure 2 is a cross-section of the pixel members cut along A-A' in Fig. 1;

Figure 3 is a cross-section of the pixel members cut along B-B' in Fig. 1;

Figure 4 is a cross-section of the pixel members cut along C-C' in Fig. 1;

Figure 5 is an equivalent circuit of a liquid crystal panel according to the first embodiment of the invention;

Figure 6 is a schematic block diagram indicating a system configuration of a liquid crystal display unit according to the first embodiment;

Figure 7 is a schematic block diagram indicating an example of data array conversion from a normal pixel array to a staggered-pixel array of the invention;

Figure 8 is a diagram of circuit for executing the data array conversion of the invention;

Figure 9 shows timing charts for data array conversion of the invention;

Figure 10 shows drive voltage waveforms in the first embodiment of the invention;

Figure 11 is a schematic block diagram indicating a planar structure of pixel members according to a second embodiment of the invention;

Figure 12 is a cross-sectional view of the pixel members cut along D-D' in Fig. 11;

Figure 13 is a diagram indicating a planar structure of pixel members according to a third embodiment of the invention;

Figure 14 is a cross-sectional view of the pixel member in part cut along D-D' in Fig. 13;

Figure 15 is a block diagram indicating an equivalent circuit of a liquid crystal panel according to the third embodiment of the invention;

Figure 16 shows drive voltage waveforms in the third embodiment of the invention;

Figure 17 shows other drive voltage waveforms in the third embodiment of the invention;

Figure 18 shows a structure of a bottom substrate of an active matrix-addressed liquid crystal display according to a fourth embodiment of the invention;

Figure 19 shows a cross-sectional view of the bottom substrate structure cut along F-F' in Fig. 18;

Figure 20 shows a cross-sectional view of the bottom substrate structure cut along G-G' in Fig. 18;

Figure 21 is a block diagram indicating an equivalent circuit of the bottom substrate structure of Fig. 18;

Figure 22 shows drive voltage waveforms of the fourth embodiment of the invention;

Figure 23 is a schematic block diagram indicating a planar structure of pixel members according to a fifth embodiment of the invention;

Figure 24 is a block diagram indicating an equivalent circuit of a liquid crystal panel according to the fifth embodiment of the invention;

Figure 25 shows timing charts of data array conversion according to the invention;

Figure 26 shows drive voltage waveforms in the fifth embodiment of the invention;

Figure 27 is a schematic block diagram indicating a planar structure of pixel members according to a sixth embodiment of the invention;

Figure 28 is a block diagram indicating an equivalent circuit of a liquid crystal panel according to the sixth embodiment of the invention; and

Figure 29 shows drive voltage waveforms in the sixth embodiment of the invention.

DESCRIPTION OF THE PREFERRED EMBODIMENT

FIRST EMBODIMENT:

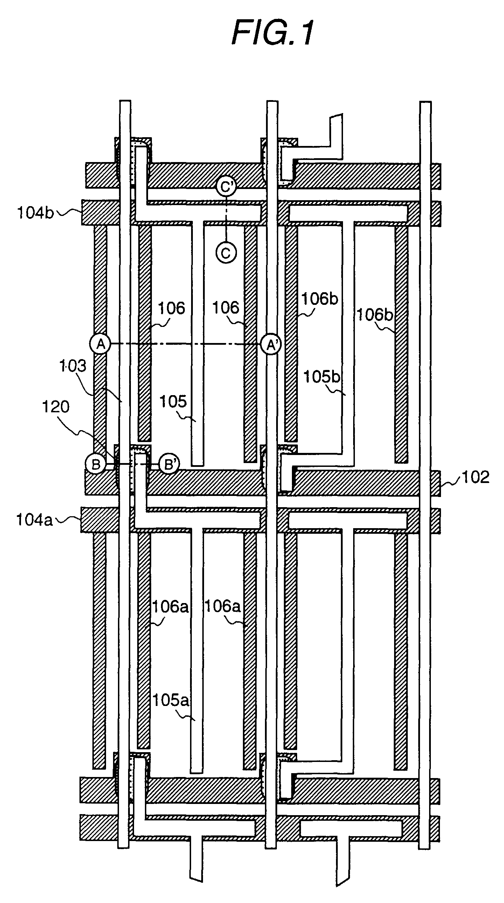

Figure 1 shows a structure of a substrate having TFTs thereon in an active matrix-addressed liquid crystal display according to the first embodiment of the invention.

Scanning lines 102 and signal lines 103 are disposed in a matrix, and a thin film transistor 120 is formed at each intersection therebetween having respective lines as its two terminals. Thin film transistor 120 is provided with another terminal which is connected to a pixel electrode 105, which functions as a switch to apply a voltage to a liquid crystal layer between the pixel electrode 105 and a counter electrode 106. Then, counter electrode 106 is connected to a common line 104 which is arranged in parallel with scanning line 102.

Respective pixel electrodes 105 connected to a same scanning line 102 via respective thin film transistors 120 disposed thereon are arranged in a staggered pattern along its scanning line 102 alternately in the upper and bottom directions thereof for every other pixels along the scanning line. For example, in Fig. 1, a first pixel electrode 105a is disposed in the bottom direction of scanning line 102 while a second pixel electrode 105b is disposed in the upper direction of the scanning line 102. In this arrangement, a counter electrode 106a corresponding to pixel electrode 105a is connected to a common line 104a, and a counter electrode 106b corresponding to pixel electrode 105b is connected to another common line 104b.

In such wiring arrangements of the invention, when a scanning line 102 is selected and display data are written into a group of pixels connected to this scanning line 102, this group of pixels which have been written or charged with display data are not aligned linearly but are disposed in a staggered pattern up and down for every other pixels across the scanning line. Further, since a current which flows through the common line for applying a voltage to the counter electrodes is divided into two subcurrents: one flowing through common line 104a and the other flowing through common line 104b, a load imposed on the common line 104 can be halved thus a voltage distortion thereof can be reduced substantially, thereby, reducing horizontal cross modulation and horizontal brightness variation substantially. Still further, the fact that the load on the common line is halved means that the common line can be fabricated thinner even though its electrical resistance may increase, without causing any deterioration in display quality. Thereby, by provision of thinner common lines, an aperture ratio of the liquid crystal display can be improved substantially.

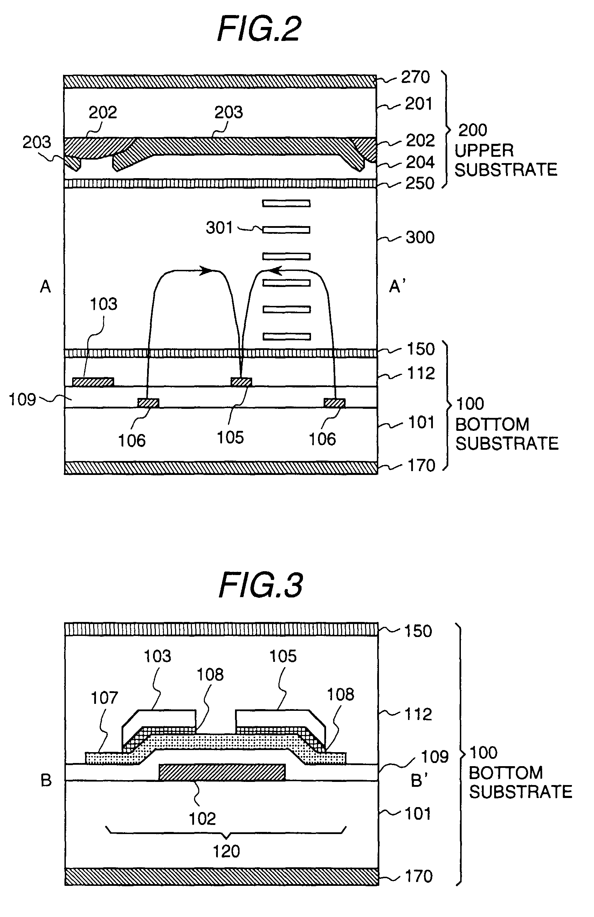

Fig. 2 shows a cross-sectional view of a liquid crystal panel of this embodiment taken along line A-A' of Fig. 1.

A bottom substrate 100 and an upper substrate 200 respectively comprise a transparent glass plate 101, 201 which is 0.7 mm thick and has a polished surface. Bottom substrate 100 has signal line 103, pixel electrode 105 and counter electrode 106 as indicated in Fig. 1, and further has a SiN layer 109 which isolates these electrodes, and a passivation layer 112 for protection of wiring.

Further, the other glass plate 201 has a low conductivity shading layer (black matrix) 202 which is formed to prevent light from leaking from a gap other than an area 203 corresponding to an area in the bottom substrate 100 surrounded by pixel electrode 105 and counter electrode 106, and a three-primary color (R,B,G) filter 203 formed in a shape of stripes on the shading layer. Further, a planarization transparent polymer layer 204 is laminated on the color filter for planarization of its surface.

Alignment film 150, 250 is formed on an innermost surface of these two substrates respectively, and is subjected to rubbing treatment, then a liquid crystal composition 300 is filled in between these substrates. Further, outermost surfaces of these substrates are sandwiched by two polarisers 170 and 270 to accomplish a liquid crystal display panel of the invention. Polyimide is used as the alignment films in this embodiment of the invention. Directions of rubbing of alignment films in the upper and the bottom interfaces are set approximately parallel with each other, and the angle of which is set at 85 degrees relative to a direction of applied electrical field. A gap between the upper and the bottom substrates is supported by spherical polymer beads which are dispersed in the periphery between these substrates, and the gap is set at 4.5 $\mu$m in a condition with the liquid crystal composition filled in. Liquid crystal composition 300 having been filled is a nematic liquid crystal composition which has a positive anisotropy of dielectric constant $\Delta\varepsilon$ the value of which is 7.3 (at 1 kHz), and anisotropy of reflectance indices $\Delta$n the value of which is 0.072 (589 nm, 20°C). Thereby, there holds that $\Delta$n $\cdot$ d=0.324 $\mu$m . Of the two polarizers, a transmission axis of one polarizer is disposed substantially parallel with the direction of rubbing of its associated alignment film (at 85 deg. relative to the direction of the applied electric field), and a transmission axis of the other polarizer is disposed substantially orthogonal to the direction of rubbing of its associated alignment film (-5 deg. relative to the direction of the applied electric field). By such arrangements, when a voltage is applied across pixel electrode 105 and counter electrode 106, a normally close property is obtained in which its pixel becomes a dark state at a low voltage and a bright state at a high voltage. Intensity of light transmitted is modulated by producing an electric field E across pixel electrode 105 and counter electrode 106 in parallel with glass plate 101, and controlling orientation of liquid crystal molecules 301 in liquid crystal composition 300.

Figure 3 shows a cross-sectional view in part of bottom substrate 100 cut along line B-B' in Fig. 1.

This cross-sectional view indicates also a cross-section of a thin film transistor (TFT) 120 which is comprised of pixel electrode (source electrode) 105, signal electrode (drain electrode) 103, scanning electrode (gate electrode) 102, and a-Si layer 107 consisting mainly of a-Si. Further, ohmic contact layer 108 comprising n-type a-Si doped with phosphor (S) is formed between a-Si layer 107 and signal line 103 as well as pixel electrode 105 for providing ohmic contact therebetween. Further, a passivation layer 112 is formed on thin film transistor 120. With inclusion of alignment film 150 formed on the passivation layer and polarizer 170 formed under glass plate 101, the bottom substrate 100 is defined. In this embodiment of the invention, an inverted staggered-type a-Si thin film transistor (TFT) is used as an active element, however, it is not limited thereto, and a staggered-type a-Si TFT, p-Si TFT, or a MOS-type transistor on a silicon wafer may be used as well.

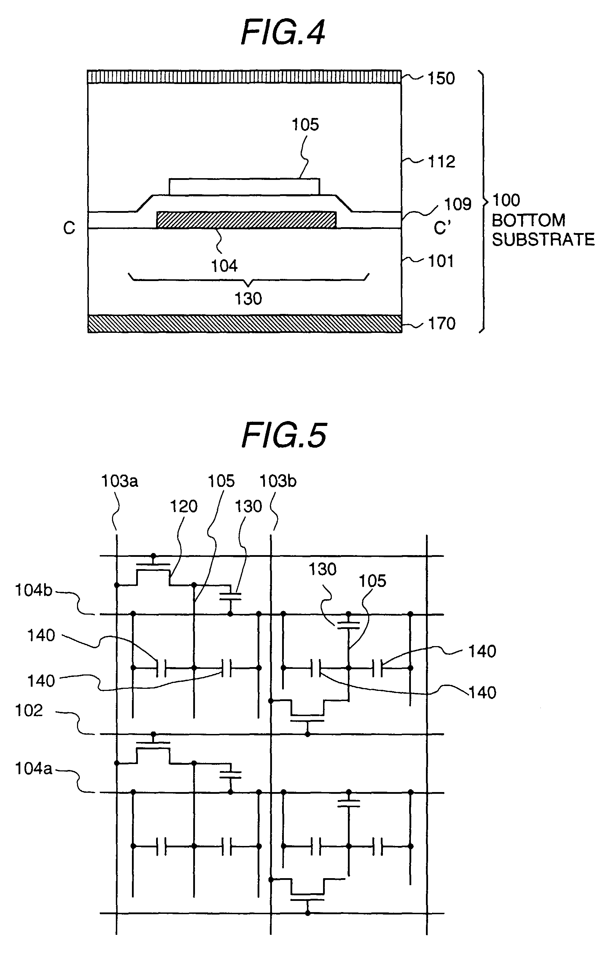

With reference to Fig. 4, a cross-sectional view in part of bottom substrate 100 taken along line C-C' of Fig. 1 is shown.

This cross-sectional view of Fig. 4 represents a cross-section of a storage capacitance 130. Storage capacitance 130 is formed between common line 104 and pixel electrode 105 isolated by SiN layer 109 interposed therebetween. Passivation layer 112 is formed on the storage capacitance, and further as bottom substrate 100 it includes alignment film 150 and polarizer 170 as well.

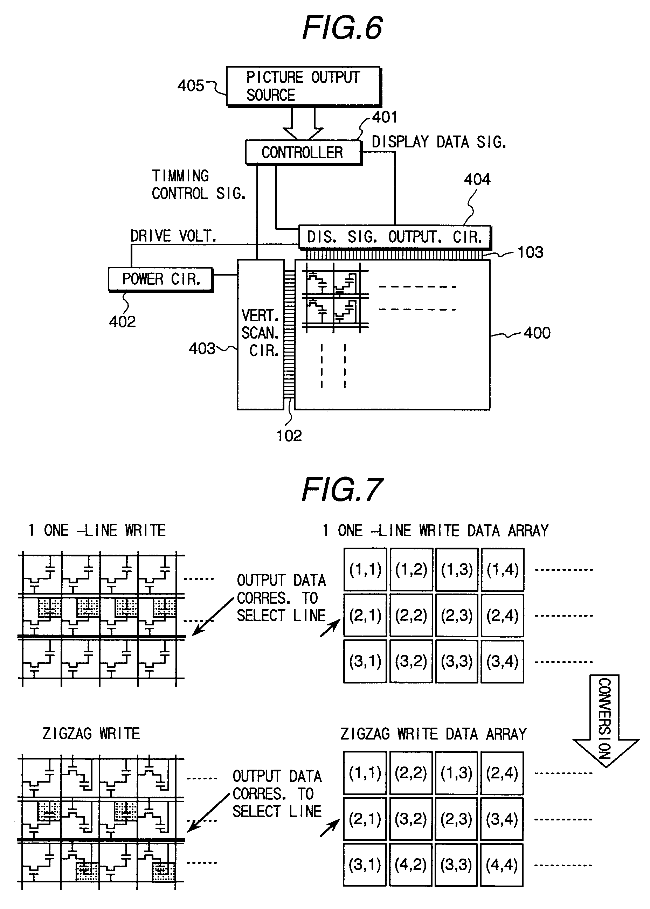

Now, a method of driving according to the first embodiment of the invention will be described. With reference to Fig. 5, an equivalent circuit of a substrate structure having TFTs thereon in the active matrix-addressing liquid crystal display of Fig. 1 according to this embodiment of the invention is shown. Corresponding to one scanning line 102, there are provided two common lines 104a, 104b and two signal lines 103a, 103b associated thereto. In each area of pixels surrounded by these scanning lines and signal lines, there are provided thin film transistor 120, storage capacitance 130 and a liquid crystal capacitance 140 assuming each liquid crystal as a capacitance. Here, liquid crystal capacitance 140 and storage capacitance 130 form a parallel capacitance, which substantially makes up an overall capacitance connected to pixel electrode 105. A system configuration of the first embodiment of the invention is indicated in Fig. 6. Display data and display timing control signals output from a picture signal generator 405 are converted by controller 401 to appropriate display data and timing control signals suitable for display on the liquid crystal display according to this embodiment of the invention. In response to this display data and timing control signals, and a drive voltage applied from a power supply circuit 402, a display signal output circuit 404 and a vertical scanning circuit 403 generate a signal voltage and a scanning voltage, respectively, and supply them to liquid crystal display panel 400 via scanning line 102 and signal line 103.

By way of example, the display data from picture signal generator 405 is transferred normally by one-line write sequence. Namely, after a display data for each pixel is transferred for one line, a next display data is transferred for a subsequent line. Controller 401 is also provided which has a function to convert a data array of this one-line data transfer sequence to a data array of the staggered data write arrangement of the invention. Figure 7 shows a schematic diagram of the data array conversion before and after conversion. This conversion is required for providing a data array of a staggered pattern so as to correspond to a staggered arrangement of pixels to be written for every other pixels when its scanning line is selected.

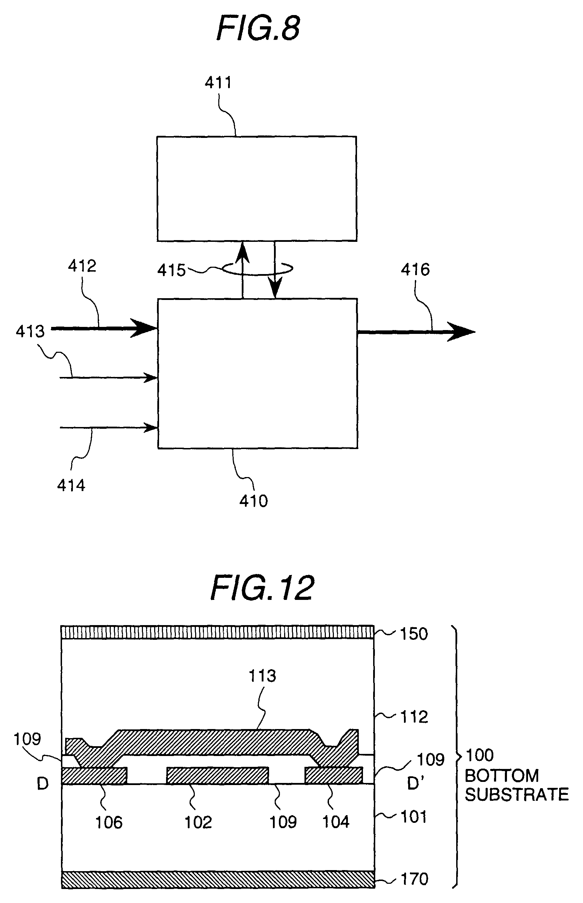

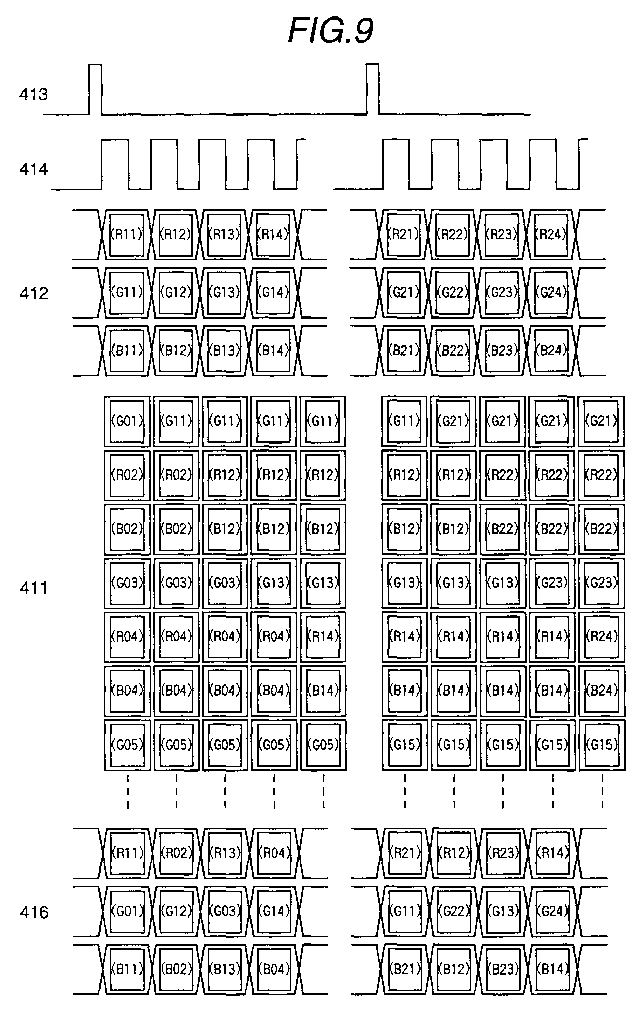

A conversion circuit for executing the above-mentioned data array conversion is shown in Fig. 8. A data array conversion controller 410 which is controlled in response to a one-line data delimit signal 413 from a picture input/output source provided internally or externally of the liquid crystal display, and a data clock signal 414, transfers a portion of data signal 412, which is output also from the picture input/output source provided internally or externally of the liquid crystal display and which portion is to be output on a subsequent line, to a data memory 411 to be stored therein. At the same time, the controller reads out a portion of preceding data which was stored at the time of the preceding line from data memory 411, and outputs it combining with input data 412 as output data 416 to a pixel display signal output circuit in a matrix for data display. Timing charts during this operation are indicated in Fig. 9. Input data signal 412 has actually three parallel input lines of R-G-B, hence having lateral pixel arrangement of R-G-B, thereby requiring respective data conversion according to R-G-B. Data conversion through interchanging of data portions starts triggered by one line data switching signal 413, and is executed at every data clock signal 414. In synchronism with a clock signal 414 immediately following one line data switching signal 413 which triggers the data conversion, G signal G11 is taken out from input signal 412 and transferred via memory access line 415 to data memory 411. At the same time, G signal G01 on the preceding line having been taken out and stored in data memory 411 is read out to be output in combination with a remaining data signal as data output 416. At a next clock, R signal R12 and B signal B12 are taken out from input data to be stored in the data memory, and at the same time a preceding R signal R02 and a preceding B signal B02 of the preceding line are read out from the memory to be output as output data signal 416 combined with a remaining G12. Afterwards, at every data clock signal 414, this cycle of store and readout of G signal and R + B signals is repeated. Then, when a next one-line data switching signal 413 is input, write and read addresses in the data memory are refreshed to original data addresses to allow data interchange conversion to be continued.

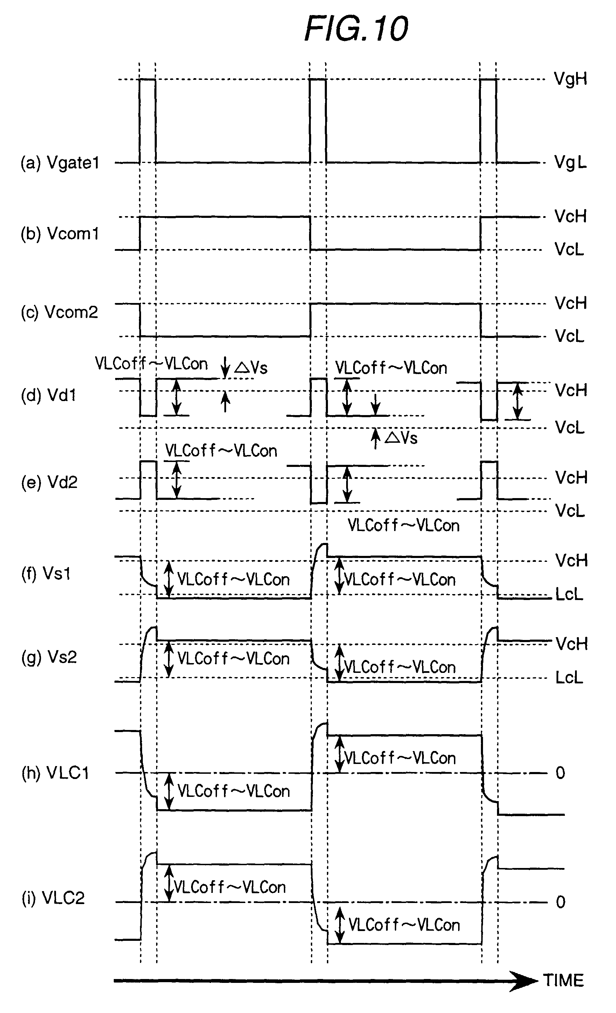

Now, with reference to Fig. 10, drive voltage waveforms in this embodiment of the invention are shown. Fig. 10(a) indicates a scanning voltage Vgate1 which is applied to a scanning line (for example, scanning line 102 in Fig. 5). Fig. 10(b) indicates a common voltage Vcom1 which is applied to a common line (common line 104a in Fig. 5), and Fig. 10(c) indicates another common voltage Vcom2 which is applied to another common line (common line 104b in Fig. 5) juxtaposed to the common line 104a. Fig. 10(d) indicates a signal voltage Vd1 which is applied to a signal line (signal line 103a in Fig. 5) of a pixel connected to the common line applied with common voltage Vcom1. Fig. 10(e) indicates a signal voltage Vd2 which is applied to another signal line (signal line 103b in Fig. 5) juxtaposed to the signal line 103a. Further, Figs. 10(f) and 10(g) show pixel electrode voltages Vs1 and Vs2 in respective pixels which are applied signal voltages Vd1 and Vd2 respectively.

Figs. 10(h) and 10(i) show liquid crystal voltages $V_{LC1}$ and $V_{LC2}$ which are applied across respective liquid crystal layers in respective pixels.

Scanning voltage Vgate1 has a select voltage VgH and non-select voltage VgL, and a period for applying the select voltage is, for example, 25 $\mu$s, and a cycle of its application is approximately 16.6ms. Common voltages Vcom1 and Vcom2 have a common high voltage VcH and a common low voltage VcL, and a period for applying each of these voltages is the same as the time of one cycle of Vgate1. Further, voltages of Vcom1 and Vcom2 differ from each other since their phases are shifted. When scanning voltage Vgate1 becomes select voltage VgH, signal voltages Vd1 and Vd2 are set at values of Vcom1 or Vcom2 $\pm$ $V_{LC}$ (where, common voltages Vcom1 or Vcom2 is used as a reference voltage) in order to apply liquid crystal application voltage $V_{LC}$ across the liquid crystal layer. As described above, since liquid crystal application voltage $V_{LC}$ has the normally close characteristic, for example, $V_{LCoff}=0V$ when dark, and $V_{LCoff}=12V$ when white. At the time of half tone, values of voltage change therebetween. Further, the term of $\pm$ $V_{LC}$ is given for enabling ac voltage supply to the liquid crystal. For example, when Vcom1=VgH , Vd1 takes a value of VcH-$V_{LC}$ and when Vcom1=VcL , takes a value of VcL+$V_{LC}$. Further, in consideration of a variation $\Delta$Vs of pixel voltage Vs which occurs when TFT changes from ON-state to OFF-state, values of Vd1 become VcH-$V_{LC}$+$\Delta$Vs and VcL+$V_{LC}$+$\Delta$Vs .

Still further, since Vd1 and Vd2 have a different reference value of Vcom based either on Vcom1 or Vcom2, they are set at values of liquid crystal application voltage having a reverse polarity. Further, when a next scanning line is selected, since values of Vcom of the reference voltage change, their polarity is caused to reverse also with respect to time.

By application of these signals, immediately after the change of Vgate1 from select voltage VgH to non-select voltage VgL, a potential of the pixel electrode in each pixel becomes -$V_{LC}$ or +$V_{LC}$ relative to its reference voltage VcH or VcL, then its potential is retained for a period of time of 16.6 ms until Vgate1 assumes a next select voltage VgH. An actual voltage $V_{LC1}$ or $V_{LC2}$ applied across the liquid crystal layer becomes a difference of its pixel electrode's potential Vs1 or Vs2 and its counter electrode's potential which is equal to common line potential Vcom1 or Vcom2. In response to this actual voltage, the liquid crystal modulates light to determine brightness of its pixel.

Depending on a magnitude of voltage applied to the signal line, there arises a problem that potential of the counter electrode which is equal to potential of the common line changes during retention of the liquid crystal application voltage due to capacitance coupling with the signal line. However, since both the liquid crystal capacitance and the storage capacitance are connected with the common line according to the invention, liquid crystal voltage $V_{LC1}$ or $V_{LC2}$ will not change even if there occurs redistribution of charges in the pixel. In the prior art where the above-mentioned two capacitances are connected to different lines, when a voltage of either one of these different lines changes, a quantity of change in the liquid crystal voltage due to redistribution of charges will become substantial, which in consequence causes vertical and horizontal cross modulations, and deterioration in display quality. However, according to this embodiment of the invention as described above, cross talk and horizontal brightness variation due to the change in the voltage of the common line during retention of the liquid crystal voltage can be eliminated.

The first embodiment of the invention described above, in which respective counter electrodes in a group of pixels which have been selected by one scanning line are connected alternately to either one of two common lines, thereby allowing the current flowing through the common line for supplying voltage to the counter electrodes to be divided into two subcurrents, has such advantages that voltage distortion in the common line can be minimized, and that since the liquid crystal capacitance and the storage capacitance are connected in parallel, cross talk and horizontal brightness variation can be minimized, thereby improving quality of display substantially. Further, through provision of the common lines using high electrical resistant and thinner wiring, the aperture ratio can be improved substantially.

SECOND EMBODIMENT:

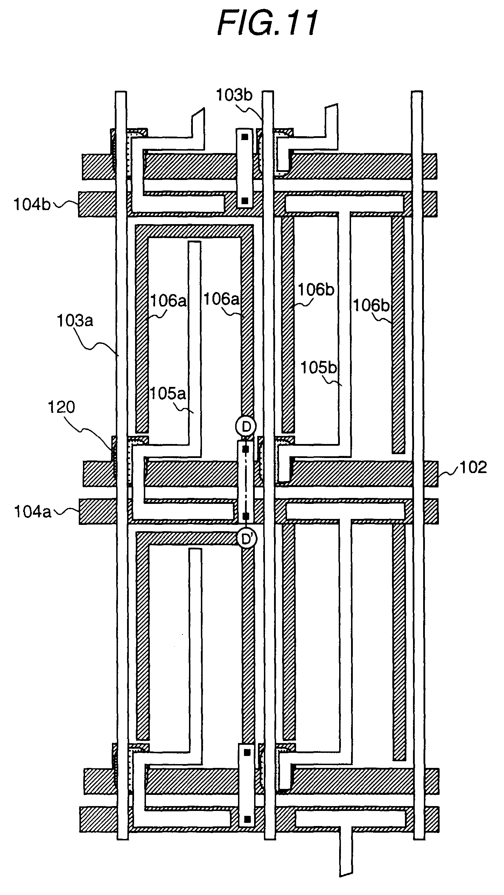

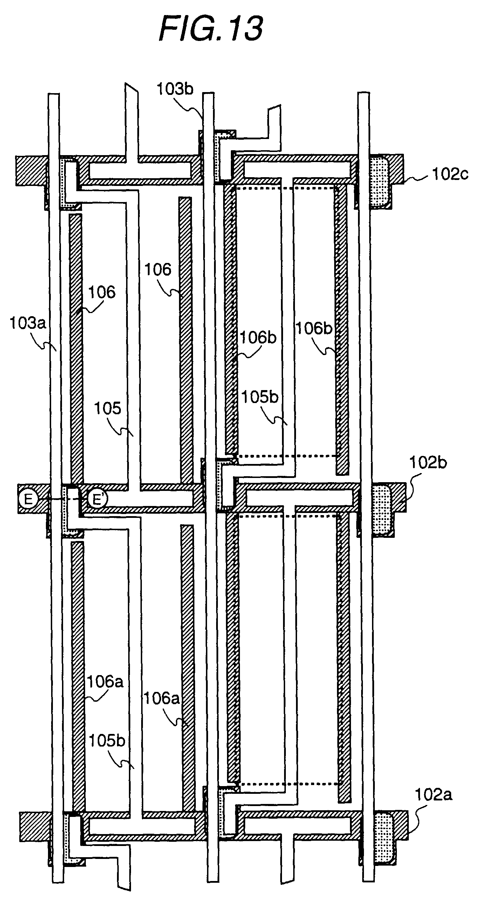

With reference to Figs. 11 and 12, a second embodiment of the invention will be described. The features of this second embodiment other than the following are the same as those of the first embodiment.

Fig. 11 shows a construction of a bottom substrate 100 of this embodiment.

This second embodiment is the same as the first embodiment in that scanning lines 102 and signal lines 103 are disposed in a matrix, and thin film transistors 120 are formed at respective intersections therebetween. However, it is different from the first embodiment in that pixel electrodes 105a and 105b which are connected to the same scanning line 102 via respective thin film transistors 102 are disposed on the same side of the same scanning line 102. However, counter electrodes 106a and 106b corresponding to these pixel electrodes 105a and 105b are connected to two different common lines 104a and 104b, respectively. Thereby, a current flowing through a common line for supplying voltage to the counter electrodes can be divided into two parts likewise the first embodiment, thereby reducing the load imposed on the common line, thereby minimizing cross talk and horizontal brightness variation. Further, the aperture ratio can be improved also through provision of a common line having a thinner diameter.

Fig. 12 shows a cross section in part of bottom substrate 100 taken out along D-D' in Fig. 11.

Since it is necessary to connect counter electrode 106 with common line 104 by overpassing scanning line 102, a metal layer 113 which is the same layer as the signal line is used for this connection. Through-holes are bored in SiN layer 109 interposed therebetween, and connections of metal layer 113 with common line 104 and counter electrode 106 are provided. Here, bottom substrate 100 is defined to include also passivation layer 112 formed on the metal layer, alignment film 150 and polarizer 170 in the bottom.

According to this embodiment of the invention, when one scanning line 102 is selected, and when display data are written in a group of pixels which are connected to this selected scanning line, the group of pixels which have been written display data are not disposed in a zigzag pattern as in the case of the first embodiment, but are aligned linearly.

An equivalent circuit and system configuration of this second embodiment are omitted since they are the same as in the first embodiment. Controller 401 of the second embodiment, however, does not have a function to convert data arrays into a staggered pattern of data arrays.

Further, according to this second embodiment, respective pixels juxtaposed vertically or horizontally are connected to a different common line from each other. Thereby, it becomes possible simultaneously to provide for ac common potential, and to apply a liquid crystal application voltage of reverse polarity to respective pixels juxtaposed each other. Through application of liquid crystal voltages of reverse polarity to juxtaposed pixels, flicker in display can be minimized thereby improving the quality of display. Thereby, according to this second embodiment of the invention, further improvement in the quality of display due to elimination of flicker can be attained in addition to the advantages of the first embodiment.

THIRD EMBODIMENT:

With reference to Fig. 13, a configuration of a bottom substrate 100 of an active matrix-addressed liquid crystal display according to a third embodiment of the invention is shown.

Scanning lines 102 and signal lines 103 are disposed in a matrix, and a thin film transistor 120 is formed at each intersections having both lines as its two terminals. Another terminal of TFT 120 is connected to pixel electrode 105, which in conjunction with counter electrode 106 constitutes a switch to apply a voltage across the liquid crystal layer interposed between the counter electrode and the pixel electrode. Further, each counter electrode 106 is connected to a different scanning line 102 which is different from a scanning line 102 to which a pixel electrode 105 corresponding thereto is connected.

Here, in this arrangement, respective pixel electrodes 105 which are connected to one same scanning line 102 via respective thin film transistors 120 are disposed in a zigzag (staggered) pattern along this same scanning line 102 alternately on the upper and the bottom sides thereof for each pixel. For example, in Fig. 13, pixel electrode 105a is disposed in the bottom side of scanning line 102b while a next pixel electrode 105b which is connected to the same scanning line 102b is disposed on the upper side of the scanning line 102b. In this instance, counter electrode 106a corresponding to pixel electrode 105a is connected to scanning line 102a of a next row, while counter electrode 106b corresponding to pixel electrode 105b is connected to scanning line 102c of a preceding row.

In such arrangement of this embodiment of the invention, when a certain scanning line 102, more particularly, 102b is selected, and display data is written into a group of pixels connected to this scanning line 102b, the group of pixels connected thereto and written in the display data are not aligned linearly, but are arranged in a staggered pattern across the selected scanning line 102b upward and downward for each pixel (such as 105a and 105b). Further, a current flowing through the scanning line for supplying a voltage to the counter electrodes of the selected group of pixels can be conducted by two scanning lines 102a and 102c, thereby a load imposed on scanning line 102 can be reduced and thus voltage distortion can be minimized. Therefore, horizontal cross modulation and horizontal brightness variation can be minimized. Still further, the fact that the load on the scanning line is reduced substantially means that a thinner diameter thus higher electrical resistance scanning line can be used without deteriorating display quality. Thereby, through provision of the thinner scanning line, aperture ratio of the display can be improved substantially. Still further, since the area occupied by the common lines can be used also as a light transmittance region, a further improvement in the aperture ratio can be realized according to this embodiment of the invention.

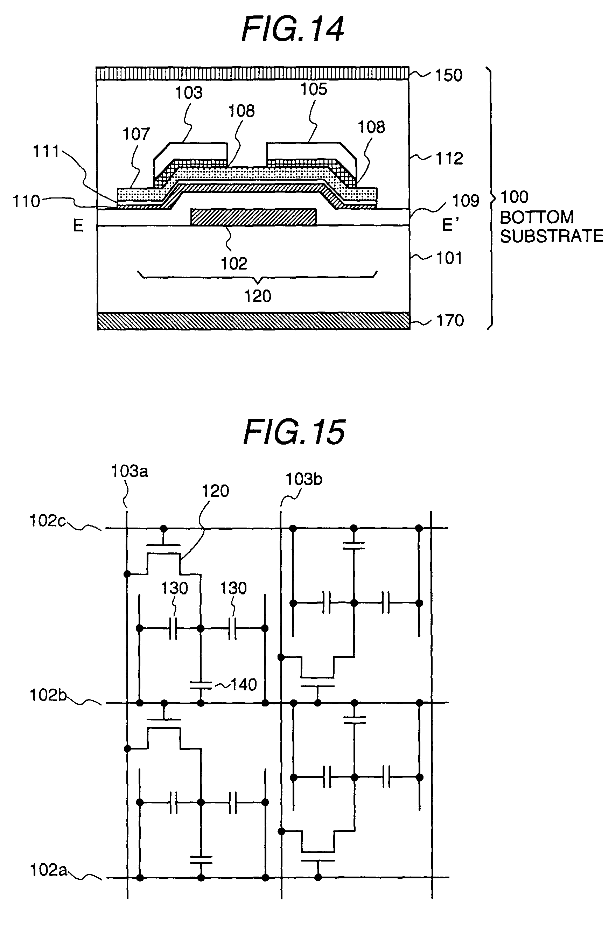

By way of example, in order to accomplish a structure in which the common line is eliminated, and counter electrode 106 is connected directly to scanning line 102 without interposing TFT therebetween, it is necessary to provide for an active element which has an enhancement characteristic, for example, that can shift a threshold of the thin film transistor. With reference to Fig. 14, a thin film transistor 120 according to the third embodiment of the invention is shown, which is a cross-sectional view in part of bottom substrate 100 taken out along line E-E' of Fig. 13. This thin film transistor 120 is comprised of pixel electrode (source electrode) 105, signal line (drain electrode) 103, scanning line (gate electrode) 102, a-Si layer 107, and a gate insulation layer including SiN layer 109, $SiO_2$ layer 110 and $SiO_2$ film 111 doped with N. Further, in order to provide for ohmic contacts between a-Si layer 107 and signal line 103 as well as pixel electrode 105, an ohmic contact layer 108 using n-type a-Si doped with phosphor is formed therebetween. A passivation layer 112 is formed on the surface of this thin film transistor 120, and further thereon is provided alignment film 150. Including these layers and polarizer 170 provided under glass plate 101, bottom substrate 100 is defined. Thin film transistor 120 according to this embodiment of the invention can shift its threshold to high voltage by 12V, for example, by applying a voltage of 100 V for 2 seconds across scanning line (gate electrode) 102 and pixel electrode (source electrode) 105, and signal line (drain electrode) 103.

Now, a drive method of this embodiment of the invention will be described. Fig. 15 shows an equivalent circuit of a bottom substrate structure 100 of Fig. 13 of a liquid crystal display panel according to the third embodiment of invention. With respect to one scanning line 102b, two scanning lines 102a and 102b function as its corresponding common lines, and also there are provided two different signal lines 103a and 103b corresponding thereto. In each area of pixels surrounded by these scanning lines and signal lines, there are provided a thin film transistor 120, storage capacitance 130 and liquid crystal capacitance 140 assuming the liquid crystal itself as a capacitance. Liquid crystal capacitance 140 and storage capacitance 130 constitute a parallel capacitance also in this embodiment.

A system configuration of this embodiment is omitted since it is the same as that of the first embodiment.

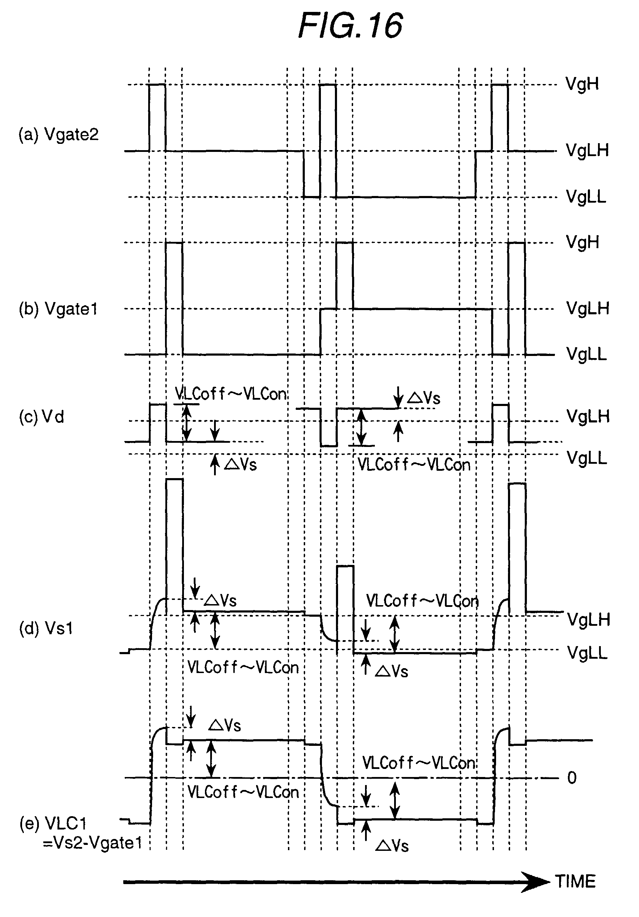

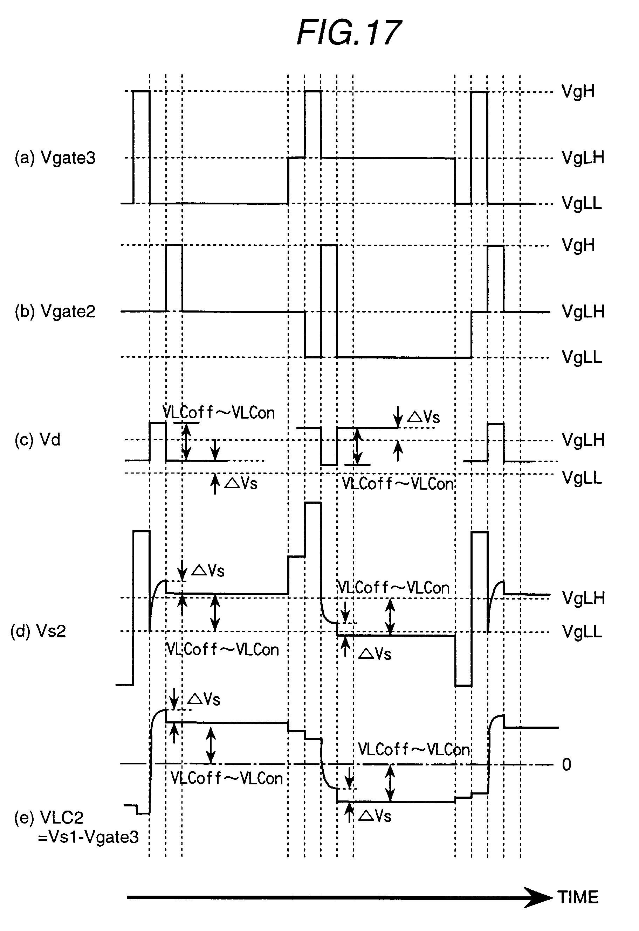

Figures 16 and 17 show waveforms of drive voltages in this embodiment of the invention. In particular, Fig. 16 shows voltage waveforms for driving pixel electrode 105a, and Fig. 17 shows voltage waveforms for driving pixel electrode 105b. More particularly, Fig. 16(b) shows scanning voltage Vgate1 applied to scanning line 102a, Fig 16(a) and Fig. 17(b) show scanning voltage Vgate2 applied to scanning line 102b, and Fig.17(a) shows scanning voltage Vgate3 applied to scanning line 102c. Further, Fig. 16(c) and Fig. 17(c) show signal voltage Vd applied to respective signal lines (for example, 103a and 103b in Fig. 15). Still further, Fig. 16(d) and Fig. 17(d)show voltage Vs1 and Vs2 at pixel electrode 105a and 105b respectively, and Fig. 16(e) and Fig. 17(e) show voltage $V_{LC1}$ and $V_{LC2}$ applied across respective liquid crystal layers in respective pixels (a voltage applied across both electrodes of liquid crystal capacitance 140).

Scanning voltages Vgate1, Vgate2 and Vgate3 include select voltage VgH, non-select high voltage $Vg_{LB}$ and non-select low voltage $Vg_{LL}$ respectively. A period of time for applying the select-voltage and a cycle of its application are, for example, 25 µs and 16.6 ms, respectively. Selection of respective scanning lines is done one by one, and in the order of Vgate3, Vgate2 and Vgate1, for example, in Figs. 16 and 17. Two levels of non-select voltage are applied by switching-over between non-select high voltage VgLH and non-select low voltage VgLL sequentially. Timing of this switching-over is set at 25 $\mu$s prior to application of select-voltage VgH. Further, since non-select high voltage VgLH and non-select low voltage VgLL are changed over for every scanning line, when one scanning line is selected (for example, 102b with Vgate2=VgH), other two scanning lines (for example, 102a with Vgate1, and 102c with Vgate3) interposing 102b therebetween have a same potential (for example, Vgate1=Vgate3=VgLH or VgLL). At this time, signal line voltage Vd is set at a value of VgLH$\pm$V$_{LC}$ or VgLL$\pm$V$_{LC}$ in order to apply liquid crystal application voltage V$_{LC}$ across the liquid crystal layer, which application voltage is set on the basis of reference voltages which are scanning line voltages Vgate1 and Vgate3 of the other two scanning lines (preceding scanning line and the following scanning line). Other parameters for setting this signal line voltage Vd are the same as in the first embodiment of the invention. However, in this embodiment of the invention, since its reference voltages Vgate1 and Vgate3 are the same, every signal line is set at values of liquid crystal application voltage of a same polarity. However, since Vgate1 and Vgate2 are not the same, its polarity must be reversed with time.

Upon application of these signal voltages, potentials Vs1 or Vs2 at respective pixel electrodes in respective pixels maintain values of VgHL(or VgLL)$\pm$V$_{LC}$ in most of its retention period relative to reference voltages VgLH or VgLL. Further, actual voltages V$_{LC1}$ or V$_{LC2}$ across its liquid crystal layer become a difference of voltages between respective pixel electrode potentials (Vs1 or Vs2) and respective counter electrode potentials corresponding thereto which are equal to respective scanning lines thereof (Vgate1 or Vgate3). In this embodiment of the invention, in a period of 50 $\mu$s including both periods prior to writing and post writing, liquid crystal application voltage V$_{LC}$ becomes different from its set value, however, this period of time is negligible in comparison with an overall retention period of 16.6 ms, thereby causing no problem such as to affect display characteristics.

According to this embodiment of the invention, since respective counter electrodes of respective pixels in a group selected by one scanning line are connected to two different scanning lines each disposed opposite across the selected scanning line, a current to respective counter electrodes in the selected group is supplied using the two different scanning lines during non-select period thereof, thereby minimizing distortion of the scanning voltage during non-select period, and since the liquid crystal capacitance and the storage capacitance form a parallel capacitance, horizontal cross modulation and horizontal brightness variation are minimized. Still further, since respective pixels juxtaposed to each other in vertical or horizontal directions are charged with liquid crystal application voltages having a reverse polarity from each other, occurrence of flicker is suppressed, thereby substantially improving its display quality. Still more, reduction of load on the scanning line means that the diameter of the scanning line can be reduced to have a higher electrical resistance without deteriorating display quality. Thereby, through provision of a thinner scanning line, the aperture ratio of the display panel can be improved. Still further improvement in the aperture ratio can be achieved since the areas used by the common lines can be utilized as a light transmittance area.

FOURTH EMBODIMENT:

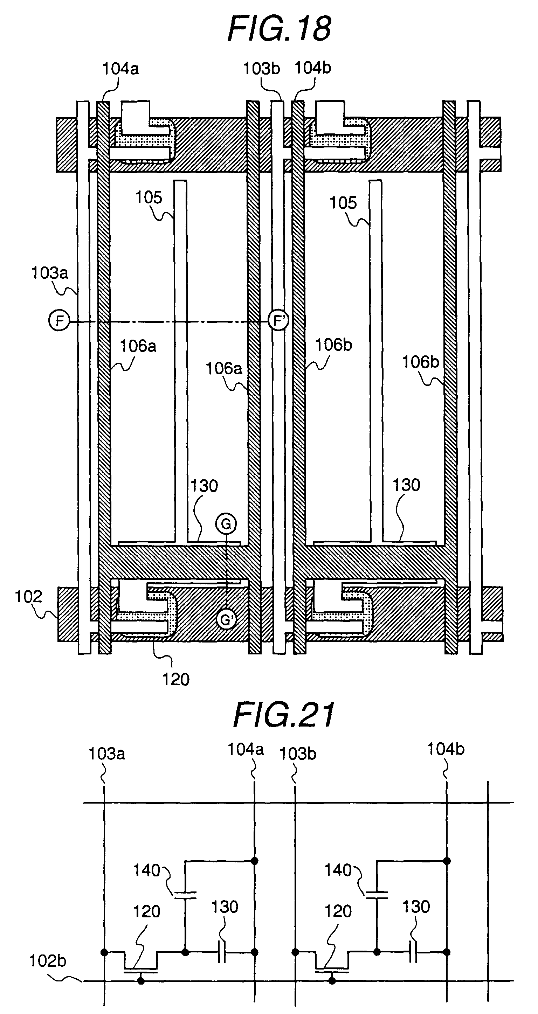

With reference to Fig. 18, there is shown a bottom substrate 100 of an active matrix-addressed liquid crystal display according to a fourth embodiment of the invention.

Scanning lines 102 and signal lines 103 are disposed in a matrix, and at each intersection thereof a thin film transistor 120 is formed having these two as its terminals. Another terminal of the thin film transistor 120 is connected to pixel electrode 105, which functions as a switch to apply a liquid crystal application voltage across its liquid crystal layer between the pixel electrode 105 and counter electrode 106. In this fourth embodiment, counter electrode 106 is disposed along signal line 103 in parallel therewith which functions also as a common line.

In this arrangement described above, the number of common lines is the same as the number of signal lines (or assumed in effect to be equal to twice the number of signal lines), thereby a current for supplying a voltage to the counter electrode can be subdivided into a number of common lines equal to the number of signal lines (or twice the number of signal lines), thus the load carried by each common line is reduced, thereby minimizing voltage distortion therein. Thus, the cross talk (or cross modulation) and horizontal brightness variation can be minimized. Further, since the counter electrode is adapted to function also as the common line, the area occupied by the common line can be reduced, thereby improving its aperture ratio.

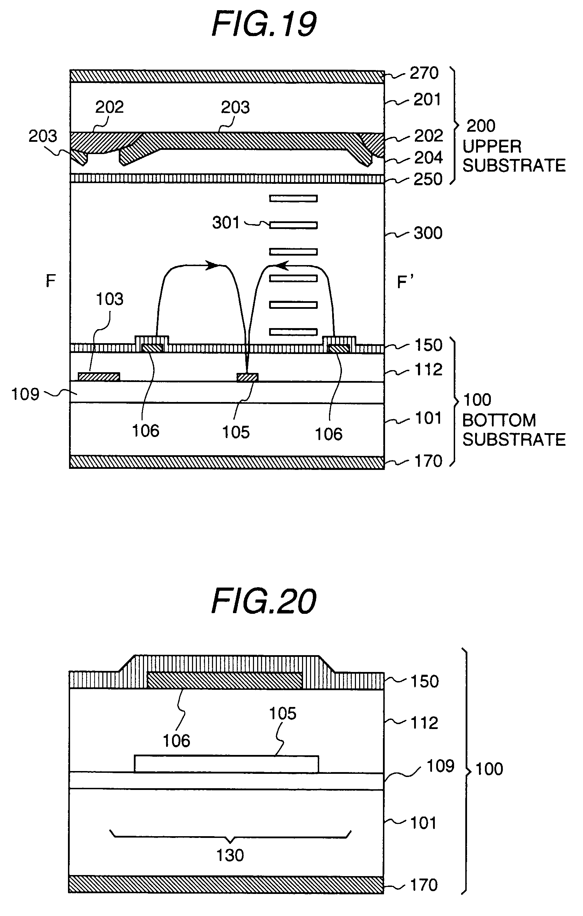

Now, with reference to Fig. 19, a cross-section in part of a liquid crystal panel taken along line F-F' of Fig. 18 is depicted.

Bottom substrate 100 and upper substrate 200 have transparent glass plates 101 and 201 as the substrate thereof, respectively which are 0.7 mm thick and have a polished surface. On the bottom substrate 100, there are formed signal line 103, pixel electrode 105 and counter electrode 106 as indicated in Fig. 18, and also SiN layer 109 for isolating these electrodes from each other and passivation layer 112 for protection of wiring are formed.

On another glass substrate 201, a black matrix 202 made of a low electric conductivity material is formed in order to improve contrast of display by preventing light from leaking through a gap other than the area between pixel electrode 105 and counter electrode 106. Then, further thereon are formed three primary color filters 203 of red (R), green (G) and blue(B) in stripes. Further, a transparent planarization polymer layer 204 for surface planarization is laminated on the surface of the color filter 203, thereby completing fabrication of the upper substrate 200.

Alignment films 150 and 250 are formed on respective surfaces of inner most parts of these two substrates, which are subjected to rubbing process, then liquid crystal composition 300 is filled in a space between these two substrates. Finally, outermost surfaces of these two substrates are sandwiched by two polarizers 170 and 270 respectively to complete fabrication of the liquid crystal display panel.

Now, Fig. 20 shows a cross-section in part of bottom substrate 100 taken along line G-G' in Fig. 18. This represents a cross-section of storage capacitance 130. This storage capacitance 130 is provided in the bottom substrate 100 and on SiN layer 109 over glass plate 101, and is formed by common line 106(104) and pixel electrode 105 isolated by passivation 112 interposed therebetween. Since this storage capacitance 130 is arranged to form a parallel capacitance with the liquid capacitance, even if the potential of common line 104 (106) changes due to capacitance coupling with signal line 103, its liquid crystal application voltage does not change substantially, thereby suppressing occurrence of cross modulation or cross talk in vertical directions.

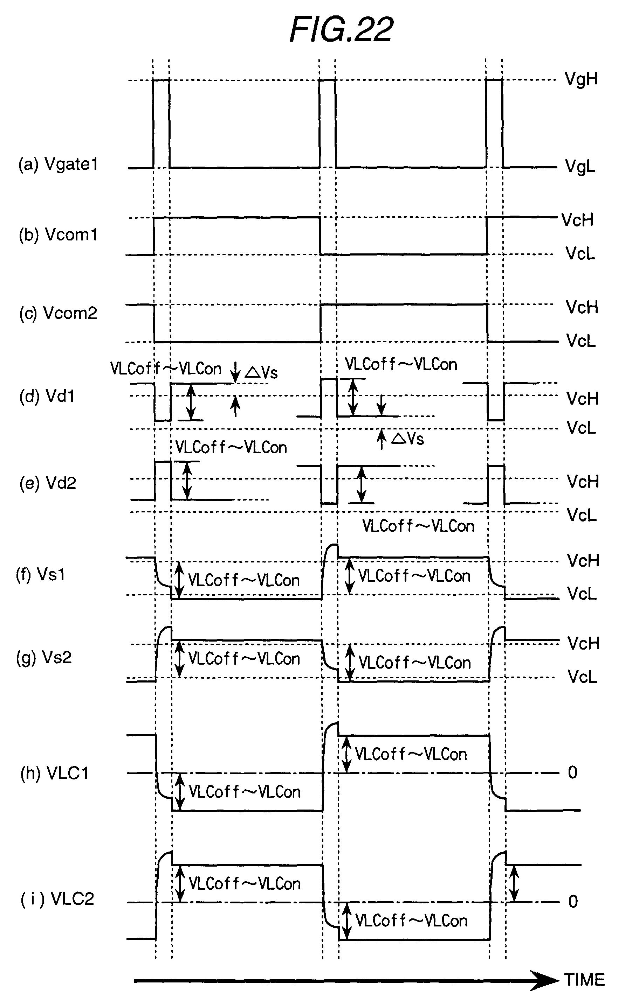

A drive method for driving the active matrix addressed liquid crystal display according to this embodiment of the invention will be described with reference to Fig. 21. The drawing of Fig. 21 shows an equivalent circuit of Fig. 18, in particular, of its bottom substrate 100. For one scanning line 102 selected, there are provided the same number (or two-fold) of common lines (counter electrodes) corresponding thereto as the number of signal lines. In each one of pixels surrounded by scanning lines and signal lines, there are provided thin film transistor 120, storage capacitance 130 and liquid crystal capacitance 140 formed by the liquid crystal layer itself. In Fig. 21, it is clearly indicated that liquid crystal capacitance 140 and storage capacitance 130 are in a parallel capacitance connection.

A system configuration of this embodiment is omitted since it is the same as in the first embodiment. It should be noted, however, that controller 401 in this embodiment does not have a function to convert its data array from the sequential display pattern to the staggered display pattern.

Figs. 22(a)-(i) depict waveforms of drive voltages. Fig. 22(a) depicts scanning voltage Vgate1 which is applied to one scanning line (for example, 102 in Fig. 21). Fig. 22(b) depicts common voltage Vcom1 which is applied to one common line (for example, 104a in Fig. 21), and Fig. 22(c) depicts another common voltage Vcom2 which is applied to another common line (for example, 104b in Fig. 21) next to common line 104a. Further, Fig. 22(d) depicts signal voltage Vd1 which is applied to a signal line (for example, 103a in Fig. 21) of the pixel to which the common line 104a which is applied Vcom1 is connected, and Fig. 22(e) depicts signal voltage Vd2 which is applied to another signal line (for example, 103b in Fig. 21) disposed next to the signal line 103a. Figs. 22(f) and (g) show pixel electrode voltages Vs1 and Vs2 of respective pixels which are applied with signal voltages Vd1 and Vd2, respectively. Then, Figs. 22 (h) and (i) show liquid crystal application voltages $V_{LC1}$ and $V_{LC2}$ applied across liquid crystal layers in respective pixels.

Setting of voltages for the scanning lines and common lines in this embodiment is the same as in the first embodiment. Setting of voltage for the signal line is also approximately the same as in the first embodiment. Although Vd1 and Vd2 are set at values of liquid crystal application voltages of reverse polarity from each other, since its reference voltage of Vcom does not change when the next scanning line is selected, the polarity of these signal voltages are not altered during a period of time required for writing one frame.

For all such a difference described above, pixel electrode voltage Vs1 or Vs2 and actual liquid crystal application voltage $V_{LC1}$ or $V_{LC2}$ are the same as in the first embodiment.

In this fourth embodiment of the invention, since a capacitance coupling per unit line of signal line 103 with common line 104 or counter electrode 106 is large, depending on a magnitude of the signal voltage, there occurs that a counter electrode potential which is equal to a common line potential changes during the retention period of the liquid crystal application voltage. However, since both liquid crystal capacitance 140 and storage capacitance 130 are connected to the common line, even if there occurs redistribution of charges retained by pixel electrode, liquid crystal voltage $V_{LC1}$ or $V_{LC2}$ does not change substantially, thereby preventing occurrence of display deficiency such as cross talk in vertical directions.

According to this fourth embodiment of the invention, the following advantages have been achieved. Since counter electrodes of pixels in a group selected by one scanning line are connected to common lines of the same number (or twofold thereof) as that of signal lines, each current flowing through the common line for supplying the voltage to the counter electrode is reduced substantially, thereby minimizing distortion in the common voltage. Still further, since the liquid crystal capacitance and the storage capacitance are connected in parallel capacitance, horizontal cross talk and brightness variation are substantially reduced, and vertical cross talk is also eliminated, thereby improving display quality. Still further, since an area previously used for disposing the common lines can be reduced, provision of a higher aperture ratio and a higher brightness of display becomes possible.

FIFTH EMBODIMENT:

A fifth embodiment of the invention will be described in the following. The other features and arrangements of the fifth embodiment of the invention except for the following are the same as in the fourth embodiment of the invention.

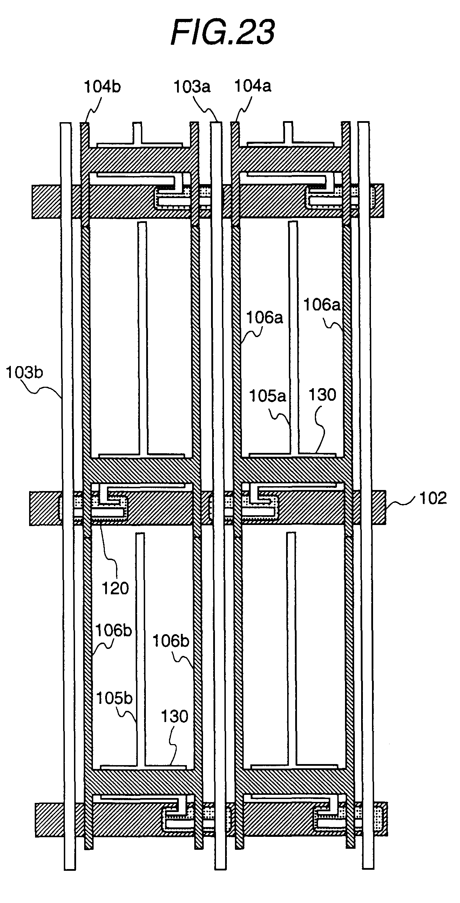

A structure of bottom substrate 100 of this embodiment is shown in Fig. 23.

The configuration of the fifth embodiment of the invention that Scanning lines 102 and signal lines 103 are disposed in a matrix, and at each intersection thereof a thin film transistor 120 is formed is the same as that of the fourth embodiment. However, the fifth embodiment differs from the fourth embodiment in that respective pixel electrodes 105 in respective pixels which are connected to one signal line 103 via each thin film transistor 120 are disposed in a staggered pattern along the one scanning line 103 on both sides thereof, i.e. to the righthand side and to the lefthand side thereof, alternately for every one pixel. For example, pixel electrode 105a is disposed to the righthand of the signal line 103a while a next pixel electrode 105b is disposed to the lefthand thereof. In this arrangement, counter electrode 106a corresponding to pixel electrode 105a, which also functions as common line 104a, is disposed to the righthand of signal line 103a, while counter electrode 106b corresponding to pixel electrode 105b, which also functions as common line 104b, is disposed to the lefthand of signal line 103a.

In this arrangement also, the number of common lines equals the number of signal lines (or twofold thereof) as in the case of the fourth embodiment, thereby, a current to flow through a common line for supplying a voltage to its counter electrode can be supplied by two common lines, thereby reducing a unit load imposed on one common line, thereby minimizing horizontal cross talk and brightness variation. Further, since the counter electrode serves also as the common line, the area of the common line can be eliminated to improve the aperture ratio of the display panel.

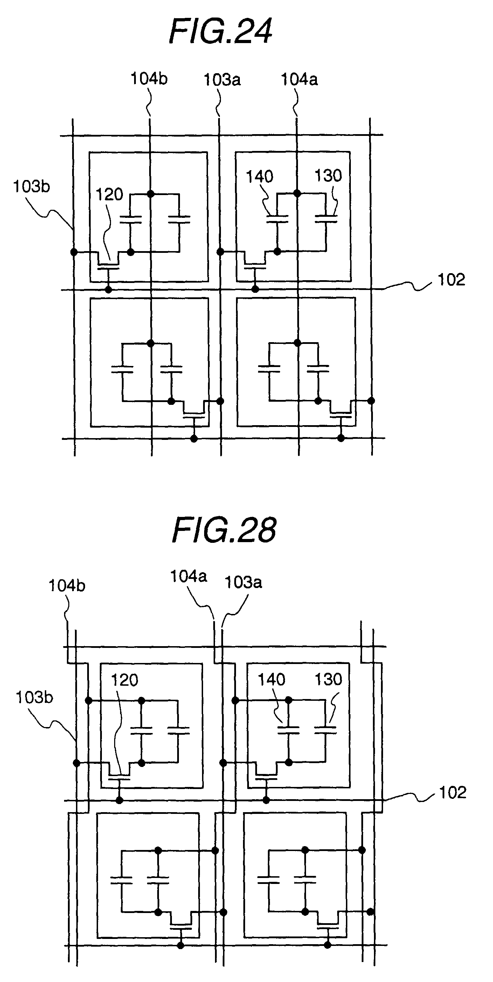

Now, a method of driving the fifth embodiment of the invention will be described in the following. Fig. 24 shows an equivalent circuit of a bottom substrate 100 as indicated in Fig. 23 of an active matrix addressed liquid crystal display according to this embodiment of the invention. A main difference of the fifth embodiment from the fourth embodiment is that respective thin film transistors 120 connected to one signal line 103 are disposed in a staggered pattern alternately to the righthand and to the lefthand with respect to the signal line 103. In this configuration according to the fifth embodiment, since data transferred by one single signal line are distributed to pixels on the both sides thereof, i.e., to the leftside and to the rightside thereof alternately for every column line, another method of data array conversion different from that of the first embodiment is required.

A system configuration of the fifth embodiment of the invention is omitted since it is the same as that of the first embodiment. However, controller 401 of the fifth embodiment has another type of data array conversion function different from that of the first embodiment.

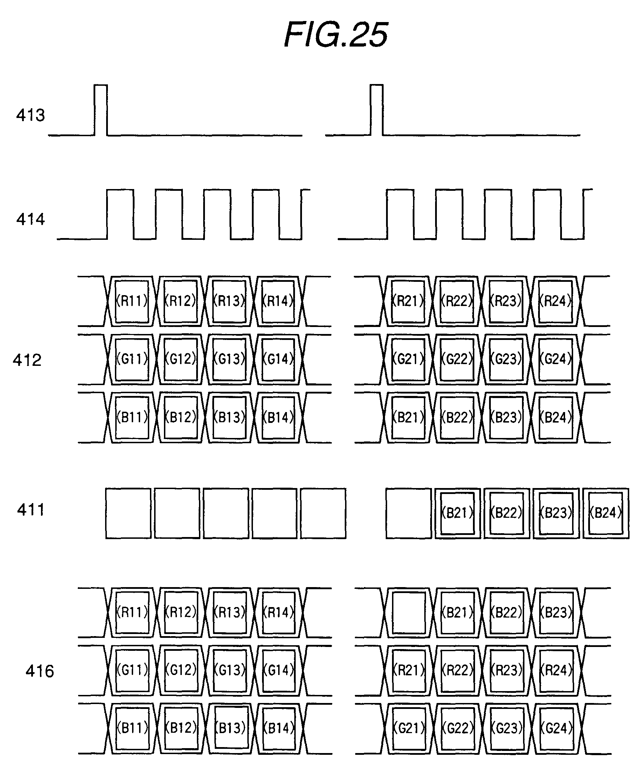

A data array conversion circuit in this embodiment is the same as shown in Fig. 8. Data array conversion controller 410 operates in response to control signals of one line data delimit signal 413 and data clock signal 414 in the same manner as in the first embodiment, and at every one line data delimit signal 413 a data array conversion mode and a non-data array conversion mode are switched over. In the non-data array conversion mode, the controller allows input data signal 412 to go through as entered as output data 416 without subjecting to the data array conversion. In the data array conversion mode, controller 410 transfers a portion of data selected from data signal 412 to data memory 411 to be stored therein and to be output at a next clock. Simultaneously, the controller reads out a portion of data having been stored at the preceding clock from data memory 411, and produces output data signal 416 by combining the portion of data read out with a remaining portion of the input data 412. Fig. 25 shows timing charts of these operation. Actually, input data signal 412 includes three parallel inputs of RGB, hence, arrays of pixels of RGB are aligned laterally, thereby, its data array conversion is executed for respective RGB data. Switching over between the data array conversion and the non-data array conversion modes is done at every one line data delimit signal 413. In the non-data array conversion mode, input data signal 412 and output data signal 416 are the same. However, in the data array conversion mode, at every clock signal 414, B signal (for example, B22) in input signal 412 is taken and transferred to data memory 411 via memory access line 415. Simultaneously, another B signal (for example, B21) having been stored in data memory 411 at the time of preceding clock is read out, which is combined with the remaining portion of the input data signal, and is output as output data 416.

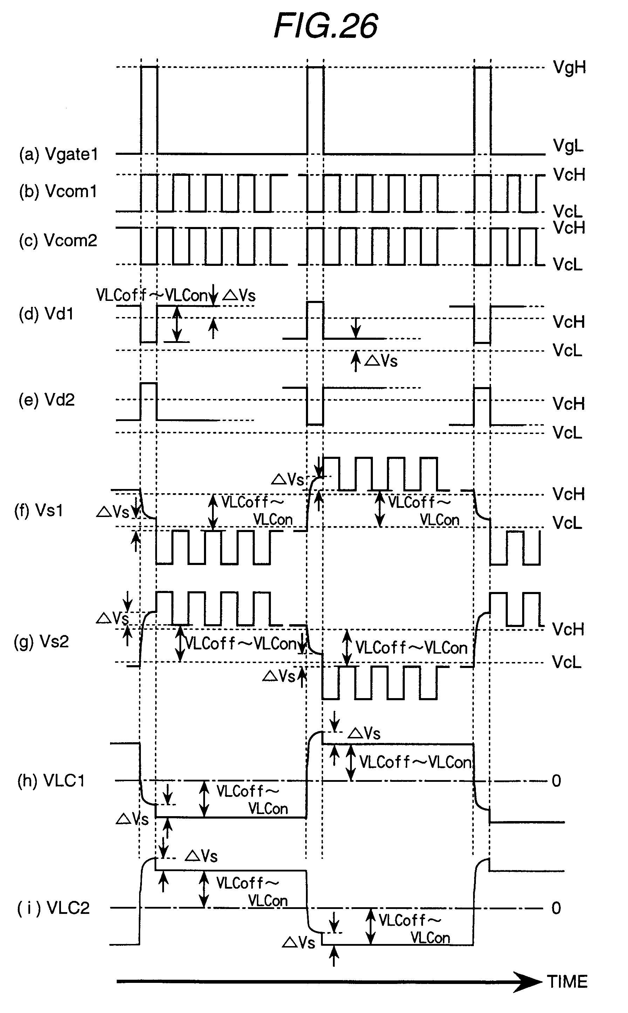

Figs. 26(a)-(i) show waveforms of drive voltages for driving the display panel according to this embodiment of the invention. Fig. 26(a) depicts scanning voltage Vgate1 which is applied to one scanning line (for example, 102 in Fig. 24). Fig. 26(b) depicts common voltage Vcom1 which is applied to one common line (for example, 104a in Fig. 24), and Fig. 26(c) depicts common voltage Vcom2 which is applied to another common line (for example, 104b in Fig. 24) which is disposed next to the above-mentioned one common line 104a. Fig. 26(d) depicts signal voltage Vd1 which is applied to a signal line (for example, 103a in Fig. 24) which is connected to the pixel having been connected to the common line 104a which is applied with common voltage Vcom1, and Fig. 26(e) depicts signal voltage Vd2 which is applied to another signal line (for example, 103b in Fig. 24) which is disposed next to the above-mentioned signal line (103a). Figs. 26(f) and 26(g) depict pixel electrode voltages Vs1 and Vs2 at respective pixel electrodes of respective pixels which are applied with signal voltages Vd1 and Vd2, respectively. Figs. 26(h) and 26(i) depict liquid crystal application voltages $V_{LC1}$ and $V_{LC2}$ applied across respective liquid crystal layers in respective pixels.

As for setting of a voltage of the scanning line, it is the same as in the fourth embodiment of the invention. Further, as for setting of voltages of the signal line, it is also the same as in the fourth embodiment, and therefore, Vd1 and Vd2 are set at values of liquid crystal application voltages having reverse polarity from each other. However, a cycle of switching over of the voltage polarity for the common line is not set at the one-frame cycle but is set at every one line write cycle in this fifth embodiment of the invention. Also, in this arrangement, since a value of Vcom which becomes a reference when the next scanning line is selected does not change, the polarity of signal voltage is not changed within a period of time required for writing one frame.

According to this fifth embodiment of the invention, since respective thin film transistors 120 connected to one signal line 103 are disposed in a staggered pattern on the lefthand then on the righthand alternately along the signal line, and since this staggered pattern is repeated for every signal line, it becomes possible to apply a liquid crystal application voltage of reverse polarity to each one of pixels juxtaposed vertically and horizontally when the polarity of potential of the signal voltage is reversed for writing another frame. Applicability of an opposite polarity liquid crystal application voltage to each one of the pixels juxtaposed vertically and horizontally enables to minimize display flickers, thereby improving display quality substantially. Therefore, according to this fifth embodiment of the invention, further improvement in display quality better than the fourth embodiment can be achieved through elimination of display flickers.

SIXTH EMBODIMENT:

A sixth embodiment of the invention will be described in the following. A configuration of the sixth embodiment of the invention is the same as the fifth embodiment except for the following arrangements.

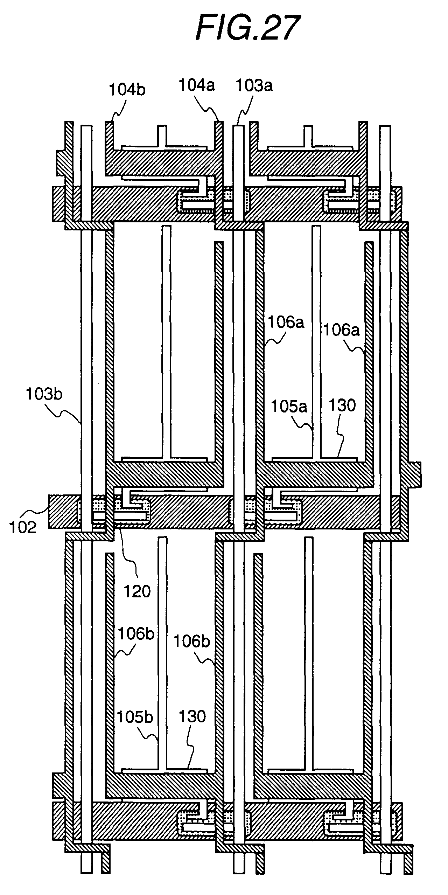

Fig. 27 shows a structure of bottom substrate 100 of this embodiment.

The sixth embodiment of the invention has the same construction as the fifth embodiment in that its scanning lines 102 and signal lines 103 are disposed in a matrix and that respective thin film transistors provided at each intersection of the matrix are disposed in a staggered pattern along a signal lines 103. However, the sixth embodiment of the invention differs from the fifth embodiment in that its common line is disposed in contact with respective pixels disposed alternately in a staggered pattern with respect to the signal line for every column line thereof. For example, counter electrode 106a which is disposed to the righthand of signal line 103a, and a next counter electrode 106b which is connected to counter electrode 106a is disposed to the lefthand of the signal line 103a.

In this case, the number of common lines equals the number of signal lines plus 1 (or equal to twofold of signal lines plus 2). Thereby, a current flowing through the common line for supplying a voltage to the counter electrode can be supplied by a plural number of common lines equal to the number of signal lines plus 1 (or twofold of the signal lines plus 2), thereby minimizing the load on the common line, thereby substantially reducing the horizontal cross talk and brightness variation. Further, since the counter electrode also functions as the common line, the area of the common line can be reduced in order to improve the aperture ratio of the display panel.

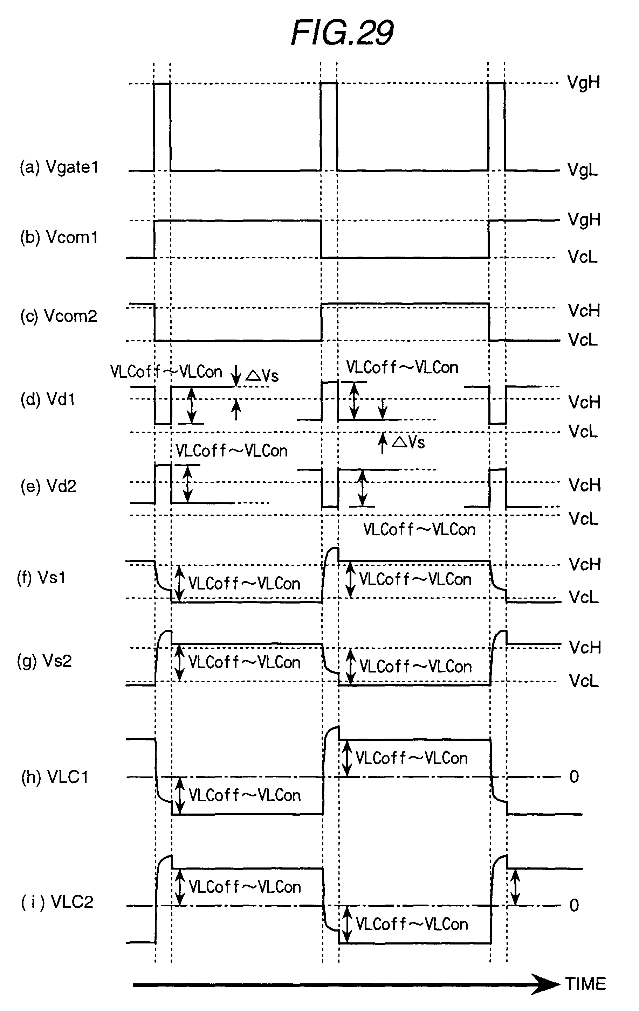

Now, a method for driving the sixth embodiment of the invention will be described. Fig. 28 shows an equivalent circuit of bottom substrate 100 of Fig. 27 in an active matrix addressed liquid crystal display according to the sixth embodiment of the invention. A main difference of its structure from the fifth embodiment of the invention resides in that one common line 104 is arranged folded in a zigzag pattern with respect to one signal line 103 so as to be connected alternately to respective pixels which are also disposed in a staggered pattern, to the lefthand and to the righthand with respect to the signal line 103. In this structure of the sixth embodiment of the invention, since signal data transmitted by one signal line is distributed alternately to respective pixels on the lefthand and on the righthand thereof and for every column line thereof, a same data array conversion process as in the fifth embodiment is required.

A system configuration of the sixth embodiment of the invention is omitted since it is the same as in the fifth embodiment. Also, a data array conversion function is omitted since it is the same as in the fifth embodiment.

Figs. 29(a)-(i) show waveforms of drive voltages in the sixth embodiment of the invention. Fig. 29(a) depicts scanning voltage Vgate1 which is applied to a scanning line (for example, 102 in Fig. 28). Fig. 29(b) depicts common line voltage Vcom1 which is applied to one common line (for example, 104a in Fig. 28), and Fig. 29(c) depicts another common line voltage Vcom2 which is applied to another common line (for example, 104b in Fig. 28) which is disposed next to the preceding common line (104a). Fig. 29(d) depicts signal voltage Vd1 which is applied to a signal line (for example 103a in Fig. 28) of the pixel which is connected to the common line which is applied with common line voltage Vcom1, and Fig. 29(e) depicts another signal voltage Vd2 which is applied to another signal line (for example, 103b in Fig. 28) which is disposed next to the preceding signal line (103a). Further, Figs. 29(f) and (g) show pixel electrode voltages Vs1 and Vs2 at respective pixel electrodes in respective pixels which are applied with signal voltages Vd1 and Vd2, respectively. Then, Figs. 29(h) and (i) show liquid crystal application voltages $V_{LC1}$ and $V_{LC2}$ which are applied across respective liquid crystal layers in respective pixels.

Setting of a voltage of the scanning line is the same as in the fifth embodiment of the invention. Also, setting of a voltage of the signal line is the same as in the fifth embodiment, and thereby, Vd1 and Vd2 are set at values of liquid crystal application voltages of reverse polarity from each other. However, a cycle of switching of the voltage polarity for the common line is performed not at one line write cycle but at one frame cycle. Also, in this voltage setting condition, since a value of Vcom which becomes a reference voltage when the next scanning line is selected does not change, the signal voltage needs not to be changed of its polarity within a period of time for writing one frame.

In this embodiment of the invention, the switching cycle for switching over the polarity of the common line is not the one line write cycle as in the fifth embodiment, but is one frame write cycle. Thereby, a voltage line delay due to the switching of the polarity of the common line is minimized, thereby suppressing occurrence of display defects such as vertical cross modulation and the like. Still further, since a switching frequency for switching over the polarity of the common line decreases, a power consumption consumed in the common line becomes small. As a result, according to this embodiment of the invention, further improvements in the display quality and power consumption better than in the fifth embodiment can be achieved.

As stated above, according to the invention, a high-performance active matrix addressed liquid crystal display is provided, which features a high quality display without horizontal cross talk and brightness variation, and also elimination of display flickers in a modified version of the invention. Further, since the voltage distortion can be minimized according to the invention, a thinner gauge of common lines and scanning lines can be used, thereby substantially improving the aperture ratio of the active matrix addressed liquid crystal display. Still further, since potential of the counter electrode of pixels can be charged in ac mode in one frame cycle, a low signal voltage in a longer cycle ac mode can be used, thereby substantially improving power consumption in the active matrix addressed liquid crystal display.

**Claims**

1. A liquid crystal display apparatus having a pair of substrates (100, 200), at least one of surfaces of each of which is transparent, and a liquid crystal layer (300) interposed between said pair of substrates, characterized in that:

   one of said pair of substrates has an electrode structure formed thereon which produces an electric field which is dominantly parallel with respect to said pair of substrates, wherein said electrode structure comprises: a plurality of scanning lines (102); a plurality of signal lines (103) formed in a matrix pattern with said plurality of scanning lines, a plurality of active elements (120) formed in the vicinity of intersections of said matrix pattern; a plurality of pixel electrodes (105) connected to said plurality of active elements; and a plurality of common lines (104) formed between said plurality of scanning lines, respectively;

   a plurality of pixels are formed in areas surrounded by said plurality of signal lines and said plurality of scanning lines, respectively; at least one counter electrode (106) is formed in each one of said plurality of pixels, said at least one counter electrode being connected to one of said plurality of common lines corresponding thereto; and pixel electrodes (105, 105b) of pixels juxtaposed in a direction of a scanning line are controlled by different scanning lines and form a storage capacitance in conjunction with a common line.

2. A liquid crystal display apparatus according to claim 1, wherein pixel electrodes of pixels juxtaposed in a direction of a scanning line respectively form a storage capacitance with respectively different common lines.

3. A liquid crystal display apparatus according to claim 1 or 2, having a drive unit (401-405) for applying a voltage to said plurality of signal lines, said plurality of scanning lines and said plurality of common lines, respectively, wherein said drive unit comprising:

   applying two different voltages to said plurality of common lines alternately for every line; said two different voltages being interchanged for every one frame write cycle; and supplying a liquid crystal application voltage to said plurality of signal lines by reversing polarity of voltage for every line and every one frame write cycle, said liquid crystal application voltage having a voltage applied to said plurality of common lines as a reference voltage.

4. A liquid crystal display apparatus having a pair of substrates (100, 200), at least one of surfaces of each of which is transparent, and a liquid crystal layer (300) interposed between said pair of substrates, characterized in that:

   one of said pair of substrates has an electrode structure formed thereon which produces an electric field which is dominantly parallel with respect to said pair of substrates, wherein said electrode structure comprises: a plurality of scanning lines (102); a plurality of signal lines (103) formed in a matrix pattern with said plurality of scanning lines; a plurality of active elements (120) formed in the vicinity of intersections of said matrix pattern; and a plurality of pixel electrodes (105) connected to said plurality of active elements corresponding thereto;

a plurality of pixels are formed in areas surrounded by said plurality of signal lines and said plurality of scanning lines;

at least one counter electrode (106) is formed in each one of said plurality of pixels, said at least one counter electrode being connected to one of a plurality of common lines (104) corresponding thereto; and

pixel electrodes (105, 105b) of pixels juxtaposed in a direction of a scanning line are controlled by different scaning lines and form a storage capacitance with said common line.

5. A liquid crystal display apparatus according to claim 4, having a drive unit (401-405) for applying a voltage to said plurality of signal lines and said plurality of scanning lines, respectively, wherein said drive unit comprises:

interchanging a portion of voltage data in time sequence to be applied to said plurality of signal lines; and exchanging a portion of voltage data to be applied to said plurality of scanning lines with a portion of voltage data to be applied to another one of said plurality of scanning lines.

6. A liquid crystal display apparatus according to claim 3, having a drive unit (401-405) for applying a voltage to said plurality of signal lines and said plurality of common lines, respectively as claimed in claim 3, wherein said drive unit comprises:

supplying a liquid crystal application voltage to said plurality of signal lines by reversing polarity of voltage thereof for every line and every one frame writing period of time, said liquid crystal application voltage having a non-selected voltage of said plurality of scanning lines in a non-selected period thereof as a reference voltage thereof.

7. A liquid crystal display apparatus having a pair of substrates (100, 200), at least one of surfaces of each of which is transparent, and a liquid crystal layer (300) interposed between said pair of substrates, characterized in that:

one of said pair of substrates has an electrode structure formed thereon which produces an electric field which is dominantly parallel with respect to said pair of substrates, wherein said electrode structure comprises: a plurality of scanning lines (102); a plurality of signal lines (103) formed in a matrix pattern with said plurality of scanning lines; a plurality of active elements (120) formed in the vicinity of intersections of said matrix pattern; and a plurality of pixel electrodes (105) connected to said plurality of active elements, respectively;

a plurality of pixels are formed in areas surrounded by said plurality of signal lines and said plurality of scanning lines;

at least one counter electrode (106) is formed in each one of said plurality of pixels, said at least one counter electrode thereof being connected to one of said plurality of scanning lines corresponding thereto; and

counter electrodes (106, 106b) of pixels juxtaposed in the direction of a scanning line are connected to different scanning lines (102b, 102c).

8. A liquid crystal display apparatus according to claim 7, having a drive unit (401-405) for applying a voltage to said plurality of signal lines and said plurality of scanning lines, respectively, wherein said drive unit comprises:

interchanging a portion of voltage data in time sequence to be applied to each one of said plurality of signal lines; and exchanging a portion of voltage data to be applied to said plurality of scanning lines with a portion of voltage data to be applied to another one of said plurality of scanning lines.

9. A liquid crystal display apparatus according to claim 7, having a drive unit (401-405) for applying a voltage to said plurality of signal lines and said plurality of scanning lines, respectively, wherein said drive unit comprises:

supplying a liquid crystal application voltage to said plurality of signal lines by reversing polarity of voltage thereof for every line and every one frame writing period of time, said liquid crystal application voltage having a non-selected voltage of said plurality of scanning lines in a non-selected period of time as a reference voltage thereof.

10. A liquid crystal display apparatus according to claim 7, wherein the pixel electrodes of pixels juxtaposed in a direction of a scanning line are controlled by different scanning lines and form a storage capacitance with a scanning line.

11. A liquid crystal display apparatus having a pair of substrates (100, 200), at least one of surfaces of each of which is transparent, and a liquid crystal layer (300) interposed between said pair of substrates, charactized in that:

one of said pair of substrates has an electrode structure formed thereon which produces an electric field which is dominantly parallel with respect to said pair of substrates, wherein said electrode structure comprises a plurality of scanning lines (102); a plurality of signal lines (103) formed in a matrix pattern with said plurality of scanning lines; a plurality of active elements (120) formed in the vicinity of intersections of said matrix pattern; a plurality of pixel electrodes (105) connected to said plurality of active elements; and a plurality of common lines (104) formed between said plurality of scanning lines, respectively:

a plurality of pixels are formed in areas surrounded by said plurality of signal lines and said plurality of scanning lines; respectively;

at least one counter electrode (106) is formed in each one of said plurality of pixels, said at least one counter electrode being connected to one of said plurality of common lines corresponding thereto; and

counter electrodes (106, 106b) of pixels juxtaposed in a direction of a scanning line are connected to different common lines (104a, 104b).

12. A liquid crystal display apparatus according to claim 11, having a drive unit (401-405) for applying a voltage to said plurality of signal lines, said plurality of scanning lines and said plurality of common lines, wherein said drive unit comprises:

applying two different voltages to said plurality of common lines alternately for every line;

interchanging said two different voltages for every one frame writing cycle; and

supplying a liquid crystal application voltage to said plurality of signal lines by reversing polarity of voltage thereof for every column line and every one frame writing period of time, said liquid crystal application voltage having a voltage applied to said plurality of common lines as a reference voltage thereof.

13. A liquid crystal display apparatus according to claim 12, wherein pixel electrodes of pixels juxtaposed in a direction of a scanning line form a storage capacitance respecitvely with different common lines.

14. A liquid crystal display apparatus having a pair of substrates (100, 200), at least one of surfaces of each of which is transparent, and a liquid crystal layer (300) interposed between said pair of substrates, characterized in that:

one of said pair of substrates has an electrode structure formed thereon which produces an electric field which is dominantly parallel with respect to said pair of substrates, wherein said electrode structure comprises a plurality of scanning lines (102); a plurality of signal lines (103) formed in a matrix pattern with said plurality of scanning lines; a plurality of active elements (120) formed in the vicinity of intersections of said matrix pattern; and a plurality of pixel electrodes (105) connected to said plurality of active elements;

a plurality of pixels are formed in areas surrounded by said plurality of signal lines and said plurality of scanning lines, respectively;

at least one counter electrode (106) is formed in each one of said plurality of pixels, said at least one counter electrode being connected to one of said plurality of scanning lines corresponding thereto; and

active matrix elements of pixels juxtaposed in a direction of a scanning line are connected to different scanning lines.

15. A liquid crystal display apparatus according to claim 14, having a drive unit (401-405) for applying a voltage to said plurality of signal lines and said plurality of scanning lines, wherein said drive unit comprises:

interchanging at least a part of voltage data in time sequence to be applied to said plurality of signal lines; and

interchanging at least a part of voltage data to be applied to one of said plurality of scanning lines with a part of voltage data to be applied to another one of said plurality of scanning lines.

16. A liquid crystal display apparatus according to claim 15, wherein said drive unit comprises:

supplying a voltage to said plurality of common lines by reversing polarity of voltage thereof for every line and every one frame writing charging period of time, said voltage having a non-selected voltage of said plurality of scanning lines in a non-selected period of time as a reference voltage thereof.

17. A liquid crystal display apparatus according to claim 15, wherein pixel electrodes of pixels juxtaposed in a direction of a scanning line respectively form a storage capacitance with different scanning lines.

18. A liquid crystal display apparatus having a pair of substrates (100, 200), at least one of surfaces of each of which is transparent, and a liquid crystal layer (300) interposed between said pair of substrates, characterized in that:

one of said pair of substrates has an electrode structure formed thereon which produces an electric field which is dominantly parallel with respect to said pair of substrates, wherein said electrode structure comprises a plurality of scanning lines (102); a plurality of signal lines (103) formed in a matrix pattern with said plurality of scanning lines; a plurality of active elements (120) formed in the vicinity of intersections of said matrix pattern; a plurality of pixel electrodes (105) connected to said plurality of active elements; and at least one common line (106) formed between any two of said plurality of scanning lines; a plurality of pixels are formed in areas surrounded by said plurality of signal lines and said plurality of scanning lines, respectively; at least one counter electrode (106) is formed in each one of said plurality of pixels, said at least one counter electrode being connected to one of said plurality of common lines corresponding thereto; and active elements of pixels juxtaposed in the direction of a scanning line are connected to different scanning lines.

19. A liquid crystal display apparatus according to claim 18, having a drive unit (401-405) for applying a voltage to said plurality of signal lines, said plurality of scanning lines and said plurality of common lines, wherein said drive unit comprises:

applying two different kinds of voltages to said plurality of common lines alternately for every line; interchanging said two different kinds of common line voltages for every one frame writing cycle; and applying a liquid crystal application voltage to said plurality of signal lines by reversing polarity of its voltage for every line and for every one frame writing cycle, said liquid crystal application voltage having a voltage applied to one of said plurality of common lines corresponding thereto as a reference voltage therefor.

20. A liquid crystal display apparatus according to claim 18, wherein pixel electrodes of pixels juxtaposed in a direction of a scanning line respectively form a storage capacitance with different common lines.

21. A liquid crystal display apparatus having a pair of substrates (100, 200), at least one of surfaces of each of which is transparent, and a liquid crystal layer (300) interposed between said pair of substrates, characterized in that:

one of said pair of substrates has an electrode structure formed thereon which produces an electric field which is dominantly parallel with respect to said pair of substrates, wherein said electrode structure comprises a plurality of scanning lines (102); a plurality of signal lines (103) formed in a matrix pattern with said plurality of scanning lines; a plurality of active elements (120) formed in the vicinity of intersections of said matrix pattern; and a plurality of pixel electrodes (105) connected to said plurality of active elements; a plurality of pixels are formed in areas surrounded by said plurality of signal lines and said plurality of scanning lines, respectively; at least one counter electrode (106) is formed in each one of said plurality of pixels, said at least one counter electrode being connected to one of said plurality of scanning lines corresponding thereto; and wherein charged pixels of said plurality of pixels juxtaposed in a direction of said plurality of scanning lines which have changed transmittance of light due to applications of voltages to signal lines and scanning lines corresponding thereto are arranged in a staggered pattern along the corresponding scanning line.

22. A liquid crystal display apparatus according to claim 21, having a drive unit (401-405) for applying voltage to said plurality of signal lines and said plurality of scanning lines, wherein said drive unit comprises:

interchanging at least a part of a voltage data to be applied to each one of said plurality of signal lines in time sequence; and exchanging at least a part of a voltage data to be applied to one of said plurality of scanning lines with at least a part of a voltage data to be applied to another one of said plurality of scanning lines.

23. A liquid crystal display apparatus according to claim 21, having a drive unit (401-405) for applying a voltage to said plurality of signal lines and said plurality of scanning lines, wherein said drive unit comprises

supplying a liquid crystal application voltage to said plurality of signal lines by reversing polarity of its voltage for every line and for every one frame writing period of time, said liquid crystal application voltage having a non-select voltage of said plurality of scanning lines in a non-select period of time as a reference voltage thereof.

24. A liquid crystal display apparatus according to claim 21, wherein pixel electrodes of pixels juxtaposed in a direction of a scanning line respectively form a storage capacitance with different scanning lines.

25. A liquid crystal display apparatus having a pair of substrates (100, 200), at least one of surfaces of each of which is transparent, and a liquid crystal layer (300) interposed between said pair of substrates, characterized in that:

one of said pair of substrates has an electrode structure formed thereon which produces an electric field which is dominantly parallel with respect to said pair of substrates, wherein said electrode structure comprises a plurality of scanning lines (102); a plurality of signal lines (103) formed in a matrix pattern with said plurality of scanning lines; a plurality of active elements (120) formed at in tersections of said matrix pattern; a plurality of pixel electrodes (105) connected to said plurality of active elements; and a plurality of common lines (104) formed between said plurality of scanning lines, respectively
a plurality of pixels are formed in areas surrounded by said plurality of signal lines and said plurality of scanning lines, respectively;
at least one counter electrode (106) is formed in each one of said plurality of pixels, said at least one counter electrode being connected to one of said plurality of common lines corresponding thereto; and wherein
charged pixels of said plurality of pixels juxtaposed in a direction of any one of said scanning lines which have changed transmittance of light thereof due to application of voltages to corresponding signal lines and scanning lines thereto are arranged in a staggered pattern along the corresponding scanning line.

26. A liquid crystal display apparatus according to claim 25, having a drive unit (401-405) for applying a voltage to said plurality of signal lines, said plurality of scanning lines and said plurality of common lines, wherein said drive unit comprises:

applying two kinds of common voltages to said plurality of common lines alternately for every line;
interchanging said two kinds of common voltages for every one frame writing cycle; and
supplying a liquid crystal application voltage to said plurality of signal lines by reversing polarity of voltage thereof for every line and for every one frame writing period of time, said liquid crystal application voltage comprising a voltage applied to one of said plurality of common lines corresponding thereto as a reference voltage thereof.

27. A liquid crystal display apparatus according to claim 25, wherein pixel electrodes of pixels juxtaposed in a direction of a scanning line respectively form a storage capacitance with different common lines.

28. A liquid crystal display apparatus having a pair of substrates (100, 200), at least one of surfaces of each of which is transparent, and a liquid crystal layer (300) interposed between said pair of substrates, characterized in that:

one of said pair of substrates has an electrode structure formed thereon which produces an electric field which is dominantly parallel with respect to said pair of substrates, wherein said electrode structure comprises a plurality of scanning lines (102); a plurality of signal lines (103) formed in a matrix pattern with said plurality of scanning lines; a plurality of active elements (120) formed in the vicinity of intersections of said matrix pattern; and a plurality of pixel electrodes (105) connected to said plurality of active elements;
a plurality of pixels are formed in areas surrounded by said plurality of signal lines and said plurality of scanning lines, respectively; and
at least two common lines (106, 106a) formed between any two signal lines of said plurality of signal lines and having one of said plurality of pixel electrodes interposed between them.

29. A liquid crystal display apparatus according to caim 28, wherein said at least two common lines formed between respective two signal lines of said plurality of signal lines are connected to each other at least partially between said respective two signal lines corresponding thereto.

30. A liquid crystal display apparatus comprising:

a liquid crystal layer (300) supported between a pair of substrates (100, 200), each substrate having at least one transparent surface;
an electrode arrangement formed on one of said pair of substrates which induces an electric field which is dominantly parallel with said substrates, said electrode arrangement comprising: a plurality of scanning lines (102); a plurality of signal lines (103) formed in a matrix with said plurality of scanning lines; and a plurality of pixel electrodes (105) provided in a plurality of pixels, which are connected to a plurality of active elements (120) which are formed at respective intersections between said plurality of signal lines and said plurality of scanning lines; wherein

each pixel electrode in any four juxtaposed pixels horizontally and vertically of said plurality of pixels is applied a voltage when other pixel electrodes juxtaposed thereto are applied no voltage.

31. A method of operating a liquid crystal display by means of a plurality of scanning lines, a plurality of signal lines formed in a matrix with said plurality of scanning lines, and a plurality of pixel electrodes provided in a plurality of pixels, which are connected to a plurality of active elements which are formed at respective intersections between said plurality of signal lines and said plurality of scanning lines; characterized in that only one pixel electrode of any four pixels arranged in a 2 x 2 block has a voltage applied, the other three pixel electrodes having no voltage applied.

# FIG.1

# FIG.2

# FIG.3

## FIG.4

## FIG.5

# FIG.6

405 — PICTURE OUTPUT SOURCE

401

CONTROLLER          DISPLAY DATA SIG.

TIMMING CONTROL SIG.

404

DRIVE VOLT.          DIS. SIG. OUTPUT. CIR.

103

POWER CIR.

402          VERT. SCAN. CIR.

403

102

400

# FIG.7

1 ONE -LINE WRITE                1 ONE -LINE WRITE DATA ARRAY

OUTPUT DATA CORRES. TO SELECT LINE

| (1,1) | (1,2) | (1,3) | (1,4) | ---------- |
| (2,1) | (2,2) | (2,3) | (2,4) | ---------- |
| (3,1) | (3,2) | (3,3) | (3,4) | ---------- |

CONVERSION

ZIGZAG WRITE                ZIGZAG WRITE DATA ARRAY

OUTPUT DATA CORRES. TO SELECT LINE

| (1,1) | (2,2) | (1,3) | (2,4) | ---------- |
| (2,1) | (3,2) | (2,3) | (3,4) | ---------- |
| (3,1) | (4,2) | (3,3) | (4,4) | ---------- |

# FIG.8

411

412    415    416

413 →

414

410

# FIG.12

113

150

112

109

100
BOTTOM
SUBSTRATE

D                    109    D'

106    102    109    104    101

170

# FIG.9

# FIG.10

(a) Vgate1 — VgH / VgL

(b) Vcom1 — VcH / VcL

(c) Vcom2 — VcH / VcL

(d) Vd1 — VLCoff~VLCon ↓ △Vs — VcH / VcL

(e) Vd2 — VLCoff~VLCon ↑ △Vs — VcH / VcL

(f) Vs1 — VLCoff~VLCon — VcH / LcL

(g) Vs2 — VLCoff~VLCon — VcH / LcL

(h) VLC1 — VLCoff~VLCon — 0

(i) VLC2 — VLCoff~VLCon — 0

TIME

# FIG.11

# FIG.13

## FIG.14

## FIG.15

# FIG.16

# FIG.17

(a) Vgate3

VgH
VgLH
VgLL

(b) Vgate2

VgH
VgLH
VgLL

(c) Vd

VLCoff~VLCon
△Vs
VgLH
VgLL
△Vs
VLCoff~VLCon

(d) Vs2

△Vs
VLCoff~VLCon
VgLH
VLCoff~VLCon
VgLL
△Vs

(e) VLC2
=Vs1-Vgate3

△Vs
VLCoff~VLCon
VLCoff~VLCon
0
△Vs

TIME

## FIG.18

## FIG.21

## FIG.19

## FIG.20

# FIG.22

# FIG.23

## FIG.24

## FIG.28

# FIG.25

# FIG.26

(a) Vgate1

(b) Vcom1

(c) Vcom2

(d) Vd1

(e) Vd2

(f) Vs1

(g) Vs2

(h) VLC1

(i) VLC2

TIME

# FIG.27

EP 0 851 270 A2

# FIG.29

39